(19) Europäisches Patentamt
European Patent Office
Office européen des brevets

(11) **EP 4 583 466 A1**

(12) **EUROPEAN PATENT APPLICATION**
published in accordance with Art. 153(4) EPC

(43) Date of publication:
**09.07.2025 Bulletin 2025/28**

(21) Application number: 22956823.3

(22) Date of filing: **30.08.2022**

(51) International Patent Classification (IPC):
***H04L 27/00*** (2006.01)   ***H04W 24/10*** (2009.01)
***H04W 36/20*** (2009.01)

(52) Cooperative Patent Classification (CPC):
**H04L 27/00; H04W 24/10; H04W 36/20**

(86) International application number:
**PCT/CN2022/115969**

(87) International publication number:
**WO 2024/044991 (07.03.2024 Gazette 2024/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.**
**Beijing 100085 (CN)**

(72) Inventor: **XIONG, Yi**
**Beijing 100085 (CN)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **MEASUREMENT REPORTING METHOD AND APPARATUS**

(57)    Disclosed in embodiments of the present disclosure is a measurement reporting method and apparatus, applicable to the technical field of communications. The method executed by a terminal device comprises: receiving configuration information sent by a network side device, and on the basis of the configuration information, determining the content of a first measurement report of measurement reporting triggered based on height; and/or in response to a departure condition that satisfies a height-based measurement reporting event, determining, on the basis of the configuration information, whether to trigger the measurement reporting. Therefore, the terminal device can determine to trigger the reporting on the basis of the configuration information, such that the network side device can optimize the mobility configuration of the terminal device, thereby enhancing the mobility.

configuration information sent by a network device is received — S31

a content of a first measurement report of height-based triggered measurement reporting is determined according to the configuration information; and/or whether to trigger the measurement reporting is determined according to the configuration information, in response to a leaving condition for a height-based measurement reporting event being satisfied — S32

FIG. 3

## Description

## FIELD

The present invention relates to the field of communication technology, and more particularly to a method and device for measurement reporting.

## BACKGROUND

In recent years, unmanned aerial vehicle (UAV)-based services have attracted dramatically increased interests in global, including a variety of UAV operations, personal entertainment in flight experience, cargo delivery, etc. As the basis of these services, remote control and data transmission capability are key aspects to be enhanced.

In a mobile communication system, the movement of a terminal will cause channel conditions around it to change all the time. In order to support the mobility of the terminal and obtain channel conditions of current surrounding cells of the terminal in time, the network device configures the terminal to perform radio resource management (RRM) measurement.

However, for a UAV terminal, its communication environment is somewhat different from that of an ordinary terminal, and the UAV can fly at different heights. Therefore, it is urgent to enhance the mobility of the UAV terminal.

## SUMMARY

Embodiments of the present invention provide a method and device for measurement reporting, in which the terminal may determine to trigger the reporting according to the configuration information, so that the network device may optimize mobility configuration of the terminal to realize the mobility enhancement.

In a first aspect, embodiments of the present invention provide a method for measurement reporting, which is performed by a terminal, and includes: receiving configuration information sent by a network device; determining a content of a first measurement report of height-based triggered measurement reporting according to the configuration information; and/or determining whether to trigger the measurement reporting according to the configuration information, in response to a leaving condition for a height-based measurement reporting event being satisfied.

In this technical solution, the terminal receives the configuration information sent by the network device; determines the content of the first measurement report of the height-based triggered measurement reporting according to the configuration information; and/or determines whether to trigger the measurement reporting according to the configuration information, in response to the leaving condition for the height-based measurement reporting event being satisfied. Therefore, the terminal may determine the triggering report according to the configuration information, so that the network device may optimize the mobility configuration of the terminal to realize the mobility enhancement.

In a second aspect, embodiments of the present invention provide another method for measurement reporting, which is performed by a network device, and includes: sending configuration information to a terminal. The configuration information is configured to: indicate a content of a first measurement report to be reported by the terminal in height-based triggered measurement reporting, and/or indicate, to the terminal, whether to trigger the measurement reporting when a leaving condition for a height-based triggering event is satisfied.

In a third aspect, embodiments of the present invention provide a communication device, which has some or all of functions of the terminal for implementing the method as described in the first aspect above. For example, the communication device may have functions as described in some or all the embodiments in the present invention, or may also have functions to separately implement any of embodiments in the present invention. The functions may be implemented by hardware, or may be implemented by software executed on corresponding hardware. The hardware or the software includes one or more units or modules corresponding to the above functions.

In an embodiment, the communication device may include: a transceiver module and a processing module in structure. The processing module is configured to support the communication device to perform corresponding functions in the above method. The transceiver module is configured to support the communication device to communicate with other devices. The communication device may further include a storage module, which is configured to couple with the transceiver module and the processing module, and store computer programs and data necessary for the communication device.

In an embodiment, the communication device includes: a transceiver module, configured to receive configuration information sent by a network device; and a processing module, configured to: determine a content of a first measurement report of height-based triggered measurement reporting according to the configuration information; and/or determine whether to trigger measurement reporting according to the configuration information in response to a leaving condition for a height-based measurement reporting event being satisfied.

In a fourth aspect, embodiments of the present invention provide another communication device, which has some or all of functions of the network device for implementing the method as described in the second aspect above. For example, the communication device may have functions as described in some or all the embodiments in the present invention, or may also have functions to separately implement any of embodiments in the present invention. The functions may be implemented by hardware, or may be implemented by software executed on corresponding hardware. The hardware or the software includes one or more units or modules corresponding to the above functions.

In an embodiment, the communication device may include: a transceiver module and a processing module in structure. The processing module is configured to support the communication device to perform corresponding functions in the above method. The transceiver module is configured to support the communication device to communicate with other devices. The communication device may further include a storage module, which is configured to couple with the transceiver module and the processing module, and store computer programs and data necessary for the communication device.

In an embodiment, the communication device includes: a transceiver module, configured to send configuration information to a terminal, where the configuration information is configured to: indicate a content of a first measurement report to be reported by the terminal in height-based triggered measurement reporting, and/or indicate, to the terminal, whether to trigger measurement reporting in a case where a leaving condition for a height-based triggering event is satisfied.

In a fifth aspect, embodiments of the present application provide a communication device. The communication device includes a processor, and the processor is configured to perform the method described in the first aspect when calling computer programs in a memory.

In a sixth aspect, embodiments of the present application provide a communication device. The communication device includes a processor, and the processor is configured to perform the method described in the second aspect when calling computer programs in a memory.

In a seventh aspect, embodiments of the present application provide a communication device. The communication device includes a processor and a memory having stored therein computer programs; and the processor is configured to execute the computer programs stored in the memory to cause the communication device to perform the method described in the first aspect above.

In an eighth aspect, embodiments of the present application provide a communication device. The communication device includes a processor and a memory having stored therein computer programs; and the processor is configured to execute the computer programs stored in the memory to cause the communication device to perform the method described in the second aspect above.

In a ninth aspect, embodiments of the present application provide a communication device. The device includes a processor and an interface circuit. The interface circuit is configured to receive code instructions and transmit the code instructions to the processor. The processor is configured to run the code instructions to cause the device to perform the method described in the first aspect.

In a tenth aspect, embodiments of the present application provide a communication device. The device includes a processor and an interface circuit. The interface circuit is configured to receive code instructions and transmit the code instructions to the processor. The processor is configured to run the code instructions to cause the device to perform the method described in the second aspect.

In an eleventh aspect, embodiments of the present application provide a random access system. The system includes the communication device described in the third aspect and the communication device described in the fourth aspect, or the system includes the communication device described in the fifth aspect and the communication device described in the sixth aspect, or the system includes the communication device described in the seventh aspect and the communication device described in the eighth aspect, or the system includes the communication device described in the ninth aspect and the communication device described in the tenth aspect.

In a twelfth aspect, embodiments of the present invention provide a computer-readable storage medium for storing instructions to be used by the above terminal, and the instructions, when executed, cause the terminal to perform the method described in the first aspect.

In a thirteenth aspect, embodiments of the present invention provide a readable storage medium for storing instructions to be used by the above network device, and the instructions, when executed, cause the network device to perform the method described in the second aspect.

In a fourteenth aspect, the present invention further provides a computer program product, which includes computer programs that, when run on a computer, cause the computer to perform the method described in the first aspect above.

In a fifth aspect, the present invention further provides a computer program product, which includes computer programs that, when run on a computer, cause the computer to perform the method described in the second aspect above.

In a sixteenth aspect, the present invention provides a chip system, which includes at least one processor and an interface, for supporting a terminal to implement functions described in the first aspect, for example, to determine or process at least one of data and information involved in the above method. In a possible design, the chip system further includes a memory for storing computer programs and data necessary for the terminal. The chip system may consist of chips, or may include chips and other discrete devices.

In a seventeenth aspect, the present invention provides a chip system, which includes at least one processor and an interface, for supporting a network device to implement functions described in the second aspect, for example, to determine or process at least one of data and information involved in the above method. In a possible design, the chip system further includes a memory for storing computer programs and data necessary for the network device. The chip system may consist of chips, or may include chips and other discrete devices.

In an eighteenth aspect, the present invention provides a computer program that, when run on a computer, causes the computer to perform the method described in the first aspect above.

In a nineteenth aspect, the present invention provides a computer program that, when run on a computer, causes the computer to perform the method described in the second aspect above.

## BRIEF DESCRIPTION OF THE DRAWINGS

In order to clearly illustrate the technical solutions in embodiments of the present invention or in the related art, drawings to be used for the description of embodiments of the present invention or the related art are described below.

FIG. 1 is a schematic diagram of a measurement model according to embodiments of the present invention;

FIG. 2 is a schematic architecture diagram of a communication system according to embodiments of the present invention;

FIG. 3 is a schematic flowchart of a method for measurement reporting according to embodiments of the present invention;

FIG. 4 is a schematic flowchart of another method for measurement reporting according to embodiments of the present invention;

FIG. 5 is a schematic flowchart of yet another method for measurement reporting according to embodiments of the present invention;

FIG. 6 is a schematic flowchart of yet another method for measurement reporting according to embodiments of the present invention;

FIG. 7 is a schematic flowchart of yet another method for measurement reporting according to embodiments of the present invention;

FIG. 8 is a schematic flowchart of yet another method for measurement reporting according to embodiments of the present invention;

FIG. 9 is a schematic flowchart of yet another method for measurement reporting according to embodiments of the present invention;

FIG. 10 is a schematic flowchart of yet another method for measurement reporting according to embodiments of the present invention;

FIG. 11 is a schematic flowchart of yet another method for measurement reporting according to embodiments of the present invention;

FIG. 12 is a schematic flowchart of yet another method for measurement reporting according to embodiments of the present invention;

FIG. 13 is a schematic flowchart of yet another method for measurement reporting according to embodiments of the present invention;

FIG. 14 is a schematic flowchart of yet another method for measurement reporting according to embodiments of the present invention;

FIG. 15 is a schematic flowchart of yet another method for measurement reporting according to embodiments of the present invention;

FIG. 16 is a schematic flowchart of yet another method for measurement reporting according to embodiments of the present invention;

FIG. 17 is a schematic flowchart of yet another method for measurement reporting according to embodiments of the present invention;

FIG. 18 is a schematic flowchart of yet another method for measurement reporting according to embodiments of the present invention;

FIG. 19 is a schematic flowchart of yet another method for measurement reporting according to embodiments of the present invention;

FIG. 20 is a schematic block diagram of a communication device according to embodiments of the present invention;

FIG. 21 is a schematic block diagram of another communication device according to embodiments of the present invention; and

FIG. 22 is a schematic block diagram of a chip according to embodiments of the present invention.

## DETAILED DESCRIPTION

In order to facilitate understanding of technical solutions of the present invention, some terms involved in the embodiments of the present invention are briefly introduced below.

1. Radio resource management (RRM) measurement

In a mobile communication system, the movement of a terminal causes channel conditions around it to change all the time. In order to support the mobility of the terminal and obtain channel conditions of current surrounding cells of the terminal in time, the network device configures the terminal to perform RRM measurement. A terminal in an idle state or an inactive state independently performs cell selection or cell reselection based on an RRM measurement result, and a terminal in a connected state reports the RRM measurement result to the network device to assist the network device in making a handover decision. During the measurement process of the terminal in the connected state, the network device in an NR system sends measurement configuration information to the terminal in the connected state via a radio resource control (RRC) signaling, and the terminal performs intrafrequency/inter-frequency/inter-radio access technology (RAT) measurement according to a content of the measurement configuration information, and reports the measurement result to the network device. The measurement can be divided into three aspects: measurement configuration, measurement execution and measurement reporting.

1) Measurement configuration

The network device uses an RRC reconfiguration process to perform the measurement configuration, and the measurement configuration information includes: a measurement object, reporting configuration, a measurement identifier, a measurement initiation threshold, a measurement gap, measurement gap allocation, and other information.

Associated configuration is performed in an index manner for each group of measurements, a total index is a measurement identifier, and all measurements are arranged according to an association relationship of the measurement identifiers, which is sent to the terminal by the network device. Each measurement identifier will be connected to a measurement object identifier and a reporting configuration identifier at the same time, indicating a combination of the measurement object that needs to be measured and the reporting configuration. Measurement object and reporting configuration that are not connected to a measurement identifier may also be sent to the terminal, but the terminal will not perform any form of measurement with respect to these configurations. It should be noted that each measurement identifier can only be associated with one measurement object identifier and one reporting configuration identifier.

2) Measurement execution

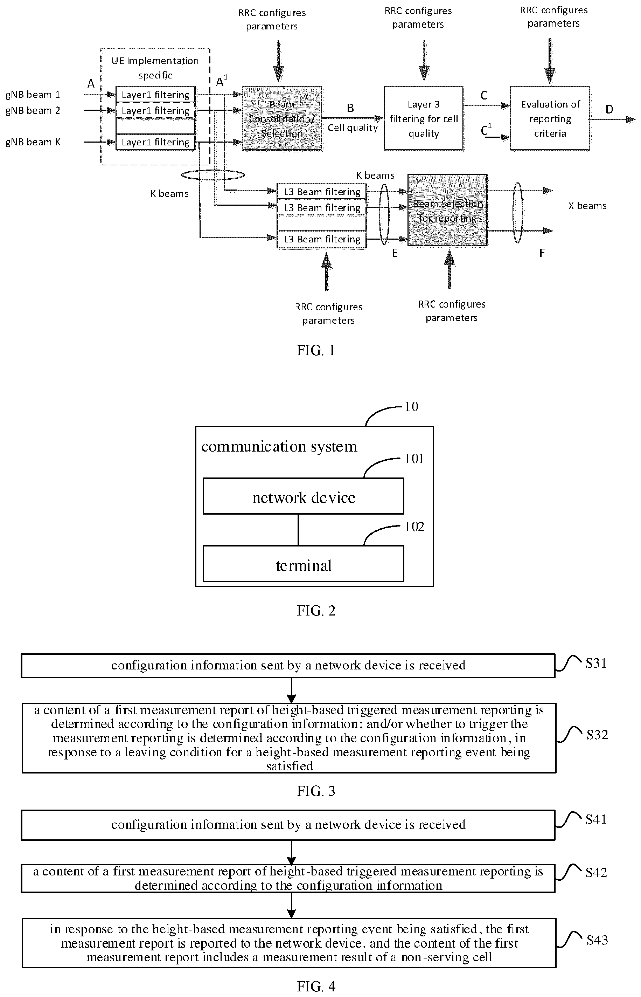

The corresponding high-level measurement model is as shown in FIG. 1 and is described below:

Note 1: K beams correspond to the measurements on SSB or CSI-RS resources configured for L3 mobility by gNB and detected by a UE at L1.

- A: measurements (beam specific samples) internal to the physical layer.
- Layer 1 filtering: internal layer 1 filtering of the inputs measured at point A. Exact filtering is implementation dependent. How the measurements are actually executed in the physical layer by an implementation (inputs A and Layer 1 filtering) in not constrained by the standard.
- A1: measurements (i.e. beam specific measurements) reported by layer 1 to layer 3 after layer 1 filtering.
- Beam Consolidation/Selection: beam specific measurements are consolidated to derive cell quality. The behavior of the Beam consolidation/selection is standardized and the configuration of this module is provided by RRC signaling. Reporting period at B equals one measurement period at A1.

- B: a measurement (i.e. cell quality) derived from beam-specific measurements reported to layer 3 after beam consolidation/selection.
- Layer 3 filtering for cell quality: filtering performed on the measurements provided at point B. The behavior of the Layer 3 filters is standardized and the configuration of the layer 3 filters is provided by RRC signaling. Filtering reporting period at C equals one measurement period at B.
- C: a measurement after processing in the layer 3 filter. The reporting rate is identical to the reporting rate at point B. This measurement is used as input for one or more evaluation of reporting criteria.
- Evaluation of reporting criteria: checks whether actual measurement reporting is necessary at point D. The evaluation can be based on more than one flow of measurements at reference point C, e.g. to compare between different measurements. This is illustrated by input C and C1. The UE shall evaluate the reporting criteria at least every time a new measurement result is reported at point C, C1. The reporting criteria are standardized and the configuration is provided by RRC signaling (UE measurements).
- D: measurement report information (message) sent on the radio interface.
- L3 Beam filtering: filtering performed on the measurements (i.e. beam specific measurements) provided at point A1. The behavior of the beam filters is standardized and the configuration of the beam filters is provided by RRC signaling. Filtering reporting period at E equals one measurement period at A1.
- E: a measurement (i.e. beam-specific measurement) after processing in the beam filter. The reporting rate is identical to the reporting rate at point A1. This measurement is used as input for selecting the X measurements to be reported.
- Beam Selection for beam reporting: selects the X measurements from the measurements provided at point E. The behavior of the beam selection is standardized and the configuration of this module is provided by RRC signaling.
- F: beam measurement information included in measurement report (sent) on the radio interface.

3) Measurement reporting

The terminal performs measurement according to the measurement configuration sent by the network device to obtain a cell-level measurement result and then report it for criteria evaluation. Generally speaking, measurement reporting may be classified into event-triggered reporting and periodical reporting according to reporting evaluation criteria. The reporting evaluation criteria used are determined according to the reporting configuration sent to the terminal.

(1) Manner of event-triggered reporting

In the related art, RRM events supported in the NR system include A1/A2/A3/A4/A5/A6 events and B1/B2 events of inter-RAT. Six types of measurement events in intra-RAT are described as follows.

Event A1: a measurement result of a serving cell is greater than a threshold;
Event A2: a measurement result of a serving cell is less than a threshold;
Event A3: a measurement result of a neighboring cell is better than a measurement result of an SpCell (may be a PCell or a PSCell);
Event A4: a measurement result of a neighboring cell is greater than a threshold;
Event A5: a measurement result of an SpCell (may be a PCell or a PSCell) is less than a threshold 1, and a measurement result of a neighboring cell is greater than a threshold 2;
Event A6: a measurement result of a neighboring cell is better than a measurement result of a certain secondary serving cell (SCell).

Measurement events in the inter-RAT supported by the NR system in the related art are described as follows.

Event B1: a measurement result of a neighbor cell in the inter-RAT is greater than a threshold;
Event B2: a measurement result of a primary serving cell (PCell) is less than a threshold 1, and a measurement result of a neighboring cell in the inter-RAT is greater than a threshold 2.

The event-triggered reporting is further divided into event-triggered once reporting and eventtriggered periodical reporting. For the event-triggered once reporting, the terminal will trigger transmission of the measurement report only when an entering threshold for a measurement event configured by the network device is satisfied and lasts for a period of time, and the procedure ends after the measurement report is sent once. The reporting configuration corresponding to this criterion is as follows:

the trigger type is "event", including one measurement event from A1 to A6 events or B1 to B2 events and its respective threshold parameter;
the number of reporting is equal to 1;
no matter what value is configured for the reporting interval, the UE ignores it.

Event-triggered periodical reporting is a combination of the event-triggered reporting and the periodical reporting. The terminal will trigger the transmission of the measurement report only when an entering threshold for a measurement event configured by the network device is satisfied and lasts for a period of time, and after the reporting is triggered, a timer between multiple measurements and a counter for counting the number of measurements will be started until the required number of reports is reached, at which point the procedure will end. The reporting configuration corresponding to this criterion is as follows:

the trigger type is "event", including one measurement event from A1 to A6 events or B1 to B2 events and its respective threshold parameter;
the number of reporting is greater than 1;
the reporting interval is valid, and the network sets a timer for the reporting period according to the configured interval parameter.

(2) Manner of periodical reporting

After the measurement configuration of the network device is completed, the terminal will measure a corresponding frequency point according to the configuration content, and send the measurement report according to the specified reporting period and interval. If the trigger type is "Period", when the maximum number of reporting is reached, the terminal will autonomously delete the corresponding measurement identifier in the measurement configuration variable. The reporting configuration corresponding to this criterion is as follows:

the trigger type is "Period";
the number of reporting is greater than 1;
the reporting interval is valid, and the network sets a timer for the reporting period according to the configured interval parameter.

In addition to the two conventional measurement reporting types mentioned above, once measurement-triggered reporting is also introduced for some special use cases, including once measurement-triggered reporting introduced for supporting an automatic neighbor relation (ANR) function, which is used to trigger the UE to obtain a certain specific cell-related information (including a cellular global identity, a tracking area code (TAC) to which the cell belongs, a public land mobile network (PLMN) list to which the cell belongs, etc.) and trigger once measurement report.
If the reporting condition is satisfied, the terminal will trigger the reporting of the measurement report. The content of the measurement report includes the following aspects.

① Measurement identifier. Based on this identifier, the network device learns various aspects of information from its own stored measurement configuration, including a measurement object corresponding to this reporting, a threshold for event-triggered measurement event, a purpose of periodic triggering, etc.
② All available serving cell measurement results.

③ According to the reporting configuration, best neighboring cell measurement results on each service frequency point are optionally carried.

④ Measurement results of neighboring cells that satisfy the trigger condition.

2. Unmanned aerial vehicle (UAV)

In recent years, unmanned aerial vehicle (UAV)-based services have attracted dramatically increased interests in global, including a variety of UAV operations, personal entertainment in flight experience, cargo delivery, etc. As the basis of these services, remote control and data transmission capability are key aspects to be enhanced, which are of interest to service providers/operators as well as UAV manufacturers.

Previously, research on UAV was carried out in Release 15 (R15). According to this research, the feasibility of the connection of the UAV through the terrestrial cellular system and the required enhancements have been verified, and enhancements in terms of uplink (UL) and downlink (DL) interferences as well as the mobility have been performed in LTE.

Height-based measurement reporting event and height reporting are introduced for LTE UAV.

Event H1 (The Aerial UE height is above a threshold);
Event H2 (The Aerial UE height is below a threshold).

A. Configuration:

Event H1 (The Aerial UE height is above a threshold)

The UE shall:

1>consider the entering condition for this event to be satisfied when condition H1-1, as specified below, is fulfilled;
1>consider the leaving condition for this event to be satisfied when condition H1-2, as specified below, is fulfilled;
where Inequality H1-1 (Entering condition)

$$Ms - Hys > Thresh + Offset$$

where Inequality H1-2 (Leaving condition)

The variables in the formula are defined as follows:

Ms is the Aerial UE height, not taking into account any offsets.
Hys is the hysteresis parameter (i.e. h1-Hysteresis as defined within ReportConfigEUTRA) for this event.

Thresh is the reference threshold parameter for this event given in MeasConfig (i.e. heightThreshRef as defined within MeasConfig).

Offset is the offset value to heightThreshRef to obtain the absolute threshold for this event. (i.e. h1-ThresholdOffset as defined within ReportConfigEUTRA).

Ms is expressed in meters.

Thresh is expressed in the same unit as Ms.

Event H2 (The Aerial UE height is below a threshold).

The UE shall:

1>consider the entering condition for this event to be satisfied when condition H2-1, as specified below, is fulfilled;
1>consider the leaving condition for this event to be satisfied when condition H2-2, as specified below, is fulfilled;
Inequality H2-1 (Entering condition)

$$Ms + Hys < Thresh + Offset$$

Inequality H2-2 (Leaving condition

$$Ms - Hys > Thresh + Offset$$

The variables in the formula are defined as follows:

Ms is the Aerial UE height, not taking into account any offsets.
Hys is the hysteresis parameter (i.e. h1-Hysteresis as defined within ReportConfigEUTRA) for this event.

Thresh is the reference threshold parameter for this event given in MeasConfig (i.e. heightThreshRef as defined within MeasConfig).

Offset is the offset value to heightThreshRef to obtain the absolute threshold for this event. (i.e. h1-ThresholdOffset as defined within ReportConfigEUTRA).

Ms is expressed in meters.

Thresh is expressed in the same unit as Ms.

B. Evaluation:

2>if the triggerType is set to event and if the eventId is set to eventH1 or eventH2 and if the entering condition applicable for this event, i.e. the event corresponding with the eventId of the corresponding reportConfig within VarMeasConfig, is fulfilled during timeToTrigger defined within the VarMeasConfig for this event, while the VarMeasReportList does not include a measurement reporting entry for this measId:

> 3>include a measurement reporting entry within the VarMeasReportList for this measId;
> 3>set the numberOfReportsSent defined within the VarMeasReportList for this measId to 0;
> 3>initiate the measurement reporting procedure;

> 2>if the triggerType is set to event and if the eventId is set to eventH1 or eventH2 and if the leaving condition applicable for this event, i.e. the event corresponding with the eventId of the corresponding reportConfig within VarMeasConfig, is fulfilled during timeToTrigger defined within the VarMeasConfig for this event:

> > 3>remove the measurement reporting entry within the VarMeasReportList for this measId;

In NR, applications suitable for UAV are more diverse, and have lower latency requirement and transmission rate requirement for UAV terminal. Therefore, for NR UAV, enhancement needs to be performed on the basis of LTE UAV.

In order to better understand the method and device for measurement reporting disclosed in the embodiments of the present invention, the communication system to which embodiments of the present invention are applicable is first described below.

Referring to FIG. 2, FIG. 2 is a schematic architecture diagram of a communication system according to embodiments of the present invention. The communication system may include, but not limited to, a network device and a terminal. The number and forms of the devices shown in FIG. 2 are only used as an example, and do not constitute a limitation on embodiments of the present invention. In actual applications, two or more network devices and two or more terminals may be included. As an example for illustration, the communication system 10 shown in FIG. 2 includes one network device 101 and one terminal 102.

It should be noted that the technical solutions as set forth in embodiments of the present invention may be applied to various communication systems, for example, a long term evolution (LTE) system, a 5th generation (5G) mobile communication system, a 5G new radio (NR) system, or other new mobile communication systems in the future.

The network device 101 in embodiments of the present invention is an entity at a network side for sending or receiving signals. For example, the network device 101 may be an evolved NodeB (eNB), a transmission reception point (TRP), a next generation NodeB (gNB) in the NR system, a base station in other future mobile communication systems, or an access node in a wireless fidelity (WiFi) system. Embodiments of the present invention do not limit the specific technique and specific device form adopted by the base station. The base station according to embodiments of the present invention may be composed of a central unit (CU) and distributed units (DUs). The CU may also be called a control unit. The CU-DU structure allows to split the base station, such as protocol layers of the base station, functions of some protocol layers are centrally controlled in the CU, functions of some or all of the remaining protocol layers are distributed in the DUs, and the CU centrally controls the DUs.

The terminal 102 in embodiments of the present invention is an entity at a user side for receiving or sending signals, such as a mobile phone. The terminal may also be called a terminal device, a user equipment (UE), a mobile station (MS), a mobile terminal (MT), and so on. The terminal may be a device with a communication function, such as a car, a smart car, a mobile phone, a wearable device, a tablet Pad, a computer with a wireless transceiver function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in transportation safety, a wireless terminal in smart city, a wireless terminal in smart home, etc. Embodiments of the present invention do not limit the specific technique and the specific device form adopted by the terminal.

It may be understood that the communication system described in embodiments of the present invention is intended to illustrate the technical solutions as set forth in embodiments of the present invention more clearly, and does not constitute a limitation on the technical solutions as set forth in embodiments of the present invention. Those of ordinary skill in the art will know that with the evolution of the system architecture and the emergence of new service scenarios, the technical solutions as set forth in embodiments of the present invention are also applicable to similar technical problems.

A method and device for measurement reporting provided in the present invention will be introduced in detail below with reference to the accompanying drawings.

In embodiments of the present invention, a method and device for measurement reporting are provided to realize the mobility enhancement of the UAV terminal. The terminal may determine a content of a first measurement report to be reported in height-triggered measurement reporting according to the configuration information of the network device, and/or determine whether to trigger measurement reporting according to the configuration information of the network device in a case where a leaving condition for a height-based measurement reporting event is satisfied, to realize the mobility enhancement of the UAV terminal.

In addition, in order to facilitate understanding of the embodiments of the present invention, the following points are explained.

First, in the present invention, "for indicating" may include "for directly indicating" and "for indirectly indicating". When describing a certain configuration information for indicating A, it may include that the configuration information directly indicates A or indirectly indicates A, but it does not mean that the configuration information must include A. When describing a certain indication information for indicating A, it may include that the indication information directly indicates A or indirectly indicates A, but it does not mean that the indication information must include A.

Information indicated by the configuration information and/or the indication information is called information to be indicated, and in specific implementations, there are many ways to indicate the information to be indicated. For example, but not limited to, the information to be indicated may be directly indicated through such as the information to be indicated itself or an index of the information to be indicated, etc. The information to be indicated may also be indirectly indicated by indicating other information, where there is an association relationship between the other information and the information to be indicated. It is also possible to indicate only a part of the information to be indicated, while other parts of the information to be indicated are known or agreed in advance. For example, specific information may also be indicated by means of a pre-agreed (for example, protocol stipulated) arrangement order of various pieces of information, thereby reducing the indication overhead to a certain extent. Further, it is also possible to identify and collectively indicate a common part of various pieces of information to reduce the indication overhead caused by indicating the same information individually.

Second, various numerical numbers such as "first", "second" and the like used in the present invention are distinguished only for convenience of description, such as for distinguishing different information or different values, but are not intended to limit the scope of the embodiments of the present invention.

Third, the "protocol" involved in the embodiments of present invention may refer to a standard protocol in the communication field, which may include, for example, LTE protocols, NR protocols, and related protocols applied in future communication systems, which are not limited in the present invention.

Fourth, in the embodiments of the present invention, in a case where the network device configures height-based triggered measurement reporting for the terminal, the maximum number of reporting is 1.

Fifth, in the embodiments of the present invention, in a case where the network device configures height-based triggered measurement reporting for the terminal, it is not supported to configure the terminal with information for indicating whether to trigger the measurement reporting when a leaving condition for a height-based measurement reporting event is satisfied.

Sixth, embodiments of the present invention enumerate various implementation modes to clearly explain the technical solutions of the embodiments of the present invention. Of course, those skilled in the art can understand that the various embodiments provided in the present invention may be performed alone or in combination with the methods as set forth in other embodiments of the present invention, or the various embodiments in the present invention alone or in combination may also be performed together with some methods in other related art; which are not limited in embodiments of the present invention.

Seventh, in embodiments of the present invention, a non-serving cell may also be called a neighboring cell; and a neighboring cell may also be called a non-serving cell.

Referring to FIG. 3, FIG. 3 is a schematic flowchart of a method for measurement reporting according to embodiments of the present invention.

As shown in FIG. 3, the method is performed by a terminal, and the method may include but is not limited to the following steps:

In S31, configuration information sent by a network device is received.

In S32, a content of a first measurement report of height-based triggered measurement reporting is determined according to the configuration information; and/or whether to trigger the measurement reporting is determined according to the configuration information, in response to a leaving condition for a height-based measurement reporting event being satisfied.

In embodiments of the present invention, the terminal receives the configuration information sent by the network device, and determines the content of the first measurement report (measResults) of the height-based triggered measurement reporting according to the configuration information.

For example: for the height-based triggered measurement reporting, when a UE initiates measurement reporting, the UE determines the content of the measurement report (measResults) to be reported according to the configuration information from the network.

The terminal includes but is not limited to one or more of a UAV terminal, an aerial terminal, or a flight terminal, which are not limited in the present invention.

The configuration information may indicate the configuration of the height-based triggered measurement reporting, and based on the configuration information, the terminal may determine under what circumstance the height-based triggered measurement reporting is required. On this basis, the terminal may determine the content of the first measurement report to be reported in the height-based triggered measurement reporting based on implementation, an indication of the network device, or a protocol, etc.

The configuration information may also indicate the content of the first measurement report of the height-based triggered measurement reporting according to the configuration information, and the terminal may determine, according to the configuration information, the content of the first measurement report that needs to be reported when performing the height-based triggered measurement reporting.

In embodiments of the present invention, the terminal receives the configuration information sent by the network device, and determines the content of the first measurement report of the height-based triggered measurement reporting according to the configuration information. Therefore, in a case where the height-based measurement reporting event is satisfied, the terminal may report the determined content of the first measurement report to the network device, so that the network device may optimize mobility configuration of the terminal according to the content of the first measurement report reported by the terminal, to realize the mobility enhancement.

It may be understood that for the height-based triggered measurement reporting, the related art does not support the terminal to trigger the reporting when the leaving condition is satisfied, and when the number of reporting times is reached, even if the terminal satisfies the height-based measurement reporting event, the terminal does not perform reporting any more. Therefore, the network device cannot know in time that the height of the terminal no longer meets the requirement of a threshold.

Since the NR UAV has higher requirements for mobility and reliability, the impact of the above problems is more pronounced in the NR UAV.

For this, in embodiments of the present invention, in the case where the leaving condition for the height-based measurement reporting event is satisfied, the terminal may determine whether to trigger the measurement reporting according to the configuration information.

The configuration information may be configured to indicate, to the terminal, whether to trigger the measurement reporting when the leaving condition for the height-based measurement reporting event is satisfied.

For example, the configuration information may be configured to indicate, to the terminal, to trigger the measurement reporting in the case where the leaving condition for the height-based measurement reporting event is satisfied, or the configuration information may also be configured to indicate, to the terminal, not to trigger the measurement reporting in the case where the leaving condition for the height-based measurement reporting event is satisfied.

Of course, the configuration information may also be configured to indicate other relevant information that enables the terminal to determine whether to trigger the measurement reporting in the case where the leaving condition for the height-based measurement reporting event is satisfied. The configuration information is configured to indicate other relevant information to indirectly indicate, to the terminal, whether to trigger the measurement reporting in the case where the leaving condition for the height-based measurement reporting event is satisfied, which is not specifically limited in embodiments of the present invention.

In embodiments of the present invention, in the case where the leaving condition for the height-based measurement reporting event is satisfied, the terminal may determine whether to trigger the measurement reporting according to the configuration information. When the terminal determines to trigger the measurement reporting according to the configuration information, the network device may obtain the height of the terminal when the leaving condition for the height-based measurement reporting event is satisfied, and promptly learns that the height of the terminal no longer meets the requirement of the threshold, so that the network device may optimize the mobility configuration of the terminal to realize the mobility enhancement.

By implementing the embodiments of the present invention, the terminal receives the configuration information sent by the network device, determines the content of the first measurement report of the height-based triggered measurement reporting according to the configuration information; and/or determines whether to trigger the measurement reporting according to the configuration information, in response to the leaving condition for the height-based measurement reporting event being satisfied. Therefore, the terminal may determine to trigger the reporting according to the configuration information, so that the network device may optimize the mobility configuration of the terminal to realize the mobility enhancement.

In embodiments of the present invention, the terminal determines the content of the first measurement report of the height-based triggered measurement reporting according to the configuration information, and the content of the first measurement report includes a measurement result of a non-serving cell.

The non-serving cell may be a neighboring cell under coverage other than the current serving cell of the terminal. The non-serving cell may also be a neighboring cell that can be detected by the terminal, or may be a neighboring cell that is determined by the terminal depending on implementation, or according to an indication from the network device, or according to a protocol, etc., which is not limited by embodiments of the present invention.

In some embodiments, in response to the height-based measurement reporting event being satisfied, the terminal reports the first measurement report to the network device, and the content of the first measurement report includes a measurement result of a non-serving cell.

It may be understood that in the height-based triggered measurement reporting, when a reporting condition is satisfied, since the triggering of the height-based triggered measurement reporting is triggered by the height of the terminal itself and has nothing to do with the neighboring cell, there is no cell that meets the event, which results in that the terminal will not report the measurement result of the neighboring cell when the height-based measurement event is satisfied. As a result, the network device cannot know the signal strength of the neighboring cell when the terminal is at the corresponding height, and thus cannot optimize the mobility configuration of the terminal based thereon, or cannot perform corresponding interference elimination, so cannot determine the wireless environment of the terminal at a certain height.

For this, in embodiments of the present invention, the terminal determines the content of the first measurement report of the height-based triggered measurement reporting according to the configuration information sent by the network device, where the content of the first measurement report includes the measurement result of the non-serving cell. In a case where the height-based measurement reporting event is satisfied, the terminal reports the first measurement report to the network device, where the content of the first measurement report includes the measurement result of the non-serving cell. In this way, the network device may optimize the mobility configuration of the terminal or perform corresponding interference elimination based on the measurement result of the non-serving cell reported by the terminal to realize the mobility enhancement.

In some embodiments, in response to the height-based measurement reporting event being satisfied, the terminal adds an applicable cell to a first cellsTriggeredList; and the applicable cell is a non-serving cell detectable by the terminal.

For example, the applicable cell is a neighboring cell detectable by the terminal on a corresponding frequency, and the corresponding frequency is a frequency corresponding to a measurement object associated with a measurement identifier corresponding to the measurement report.

In embodiments of the present invention, if the network device has configured an allowed cell list used by the terminal, for example, the parameter useAllowedCellList is configured to be true, the applicable cell is a cell in the allowed cell list, otherwise, the applicable cell is not a cell in an excluded cell list.

In embodiments of the present invention, in the case where the height-based measurement reporting event is satisfied, the terminal adds the applicable cell to the first cellsTriggeredList.

The height-based measurement reporting event includes but is not limited to one or more of event H1 or event H2, which is not specifically limited in embodiments of the present invention.

In embodiments of the present invention, the applicable cell is a non-serving cell detectable by the terminal. For example, the applicable cell is a non-serving cell detectable by the terminal on a frequency corresponding to the configuration information sent by the network device.

In embodiments of the present invention, the first cellsTriggeredList is stored by the terminal.

In some embodiments, the terminal reports the first measurement report to the network device, and the content of the first measurement report includes one or more cells in the first cellsTriggeredList.

In embodiments of the present invention, in the case where the height-based measurement reporting event is satisfied, the terminal adds the applicable cell to the first cellsTriggeredList, and then may report the first measurement report to the network device, where the content of the first measurement report includes one or more cells in the first cellsTriggeredList.

In some embodiments, the content of the first measurement report includes a first number of cells with best measurement results in the first cellsTriggeredList, where the first number is an integer.

In embodiments of the present invention, in the case where the height-based measurement reporting event is satisfied, the terminal adds the applicable cell to the first cellsTriggeredList, and then may report the first measurement report to the network device, and the content of the first measurement report includes the first number of cells with best measurement results in the first cellsTriggeredList, where the first number is an integer.

For example, the first number is 3. In the case where the height-based measurement reporting event is satisfied, the terminal adds the applicable cell to the first cellsTriggeredList, and then may report the first measurement report to the network device, and the content of the first measurement report includes 3 cells with best measurement results in the first cellsTriggeredList.

Of course, the above example is only for illustration, and the first number may be other integer other than 3, and may be set as needed, which is not specifically limited in embodiments of the present invention.

In embodiments of the present invention, the terminal may determine the first number depending on implementation, or according to an indication from the network device, or according to a protocol, etc., which is not limited by embodiments of the present invention.

In some embodiments:

For each measurement Id (measId) stored by the terminal, if the corresponding reporting type is set to eventTriggered, and the event is the height-based measurement reporting event, and if an entering condition applicable to this event is satisfied during a corresponding trigger time, one or more of the following steps is performed:

　　　including an entry corresponding to this measurement Id in a table that stores measurement reporting;
　　　including applicable cell(s) in a corresponding cellsTriggeredList;
　　　setting the number of reporting corresponding to this measurement identifier to 0; or
initiating a measurement reporting procedure.

For example,

1> for each measId included in the measIdList within VarMeasConfig:

2> if the reportType is set to eventTriggered and if the eventId is set to eventH1 or eventH2 and if the entering condition applicable for this event, i.e. the event corresponding with the eventID of the corresponding reportConfig within VarMeasConfig, is fulfilled during timeToTrigger defined within the VarMeasConfig for this event, one or more of the following steps is performed:
Possibly, it also needs to determine whether VarMeasReportList includes a measurement reporting entry for this measId: If no, perform one or more of the following steps, otherwise, do not perform one or more of the following steps:

3>include a measurement reporting entry within the VarMeasReportList for this measId;
3> include the applicable cell(s) in the cellsTriggeredList defined within the VarMeasReportList for this measId;
3>set the numberOfReportsSent defined within the VarMeasReportList for this measId to 0;
3>initiate the measurement reporting procedure.

In some embodiments, the content of the first measurement report further includes a cell identifier and/or a measurement result corresponding to a cell.

For example, for the first number of cells included in the content of the first measurement report, cell identifiers and/or corresponding measurement results of the first number of cells are included in the content of the first measurement report.

The measurement result of the non-serving cell included in the first measurement report includes the cell identifiers and/or corresponding measurement results of the first number of cells.

In embodiments of the present invention, the content of the first measurement report includes X best neighboring cells in the first cellsTriggeredList, where X is an integer.

For example, the measurement result of the neighboring cell included in the content of the first measurement report includes measurement results of the best X neighboring cells in the first cellsTriggeredList, which are then reported to the network device.

For example: the first number is configured by the network device, or specified in a protocol, or determined by the terminal depending on implementation.

In embodiments of the present invention, in the case where the height-based measurement reporting event is satisfied, the terminal adds the applicable cell to the first cellsTriggeredList, and then may report the first measurement report to the network device, and the content of the first measurement report includes one or more cells in the first cellsTriggeredList and the identifier corresponding to each of the one or more cells.

In embodiments of the present invention, in the case where the height-based measurement reporting event is satisfied, the terminal adds the applicable cell to the first cellsTriggeredList, and then may report the first measurement report to the network device, and the content of the first measurement report includes one or more cells in the first cellsTriggeredList and the measurement result corresponding to each of the one or more cells.

In embodiments of the present invention, in the case where the height-based measurement reporting event is satisfied, the terminal adds the applicable cell to the first cellsTriggeredList, and then may report the first measurement report to the network device, and the content of the first measurement report includes the first number of cells with best measurement results in the first cellsTriggeredList and the cell identifier corresponding to each of the first number of cells.

In embodiments of the present invention, in the case where the height-based measurement reporting event is satisfied, the terminal adds the applicable cell to the first cellsTriggeredList, and then may report the first measurement report to the network device, and the content of the first measurement report includes the first number of cells with best measurement results in the first cellsTriggeredList and the measurement result corresponding to each of the first number of cells.

It should be noted that the above embodiments are not exhaustive, but are only examples of some embodiments, and the above embodiments may be implemented individually or in combination, which is not specifically limited by embodiments of the present invention.

In some embodiments, in response to the height-based measurement reporting event being satisfied, the terminal reports the first measurement report to the network device, the content of the first measurement report includes one or more cell in applicable cells, and the applicable cells are non-serving cells detectable by the terminal.

For example, the applicable cell is a neighboring cell detectable by the terminal on a corresponding frequency, and the corresponding frequency is a frequency corresponding to a measurement object associated with a measurement identifier corresponding to the measurement report.

In embodiments of the present invention, if the network device has configured an allowed cell list used by the terminal, for example, the parameter useAllowedCellList is configured to be true, the applicable cell is a cell in the allowed cell list, otherwise, the applicable cell is not a cell in an excluded cell list.

In embodiments of the present invention, in the case where the height-based measurement reporting event is satisfied, the terminal reports the first measurement report to the network device, and the content of the first measurement report includes one or more cells in the applicable cells.

The height-based measurement reporting event includes but is not limited to one or more of event H1 or event H2, which is not specifically limited in the present invention.

In embodiments of the present invention, the applicable cell is a non-serving cell detectable by the terminal. For example, the applicable cell is a non-serving cell detectable by the terminal on a frequency corresponding to the configuration information sent by the network device.

In some embodiments, the content of the first measurement report includes a second number of cells with best measurement results in the applicable cells, where the second number is an integer.

In embodiments of the present invention, in the case where the height-based measurement reporting event is satisfied, the terminal reports the first measurement report to the network device, and the content of the first measurement report includes one or more cells in the applicable cells, including the second number of cells with best measurement results in the applicable cells.

For example, the second number is 3. In the case where the height-based measurement reporting event is satisfied, the terminal reports the first measurement report to the network device, and the content of the first measurement report includes 3 cells with best measurement results in the applicable cells.

Of course, the above example is only for illustration, and the second number may be other integer other than 3, and may be set as needed, which is not specifically limited in embodiments of the present invention.

For example, the second number is configured by the network device, specified by a protocol, or determined by the terminal depending on implementation.

In embodiments of the present invention, the terminal may determine the second number depending on implementation, or according to an indication from the network device, or according to a protocol, etc., which is not specifically limited in embodiments of the present invention.

In embodiments of the present invention, in a case where the reporting event is the height-based measurement reporting event, the terminal adds X neighboring cells with best measurement results in the applicable cells into the measurement result of the non-serving cell included in the content of the first measurement report, where X is an integer.

In embodiments of the present invention, in the case where the reporting event is the height-based measurement reporting event, the terminal adds an applicable cell for which the new measurement result becomes available since last measurement reporting, measurement initiation or measurement reset into the measurement result of the non-serving cell included in the content of the first measurement report.

In some embodiments, if there is an applicable cell to be reported by the terminal, and if the reporting type is set to event-based reporting or periodical reporting, measurement results of neighboring cells are set to include best neighboring cells up to a maximum reporting cell number:

For example, if the reporting type is event-based reporting, but the event is not event H1 and/or event H2 (and/or other height-based measurement reporting events), measurement results of neighboring cells include cells in a cellsTriggeredList corresponding to a respective measurement identifier within the Var variable; otherwise, an applicable cell is included, and the applicable cell may be an applicable cell for which the new measurement result becomes available since last periodical reporting, measurement initiation or measurement reset.

For example, if the reporting type is the event-based reporting, but the event is not event H1 and/or event H2 (and/or other height-based measurement reporting events), measurement results of neighboring cells include cells in a cellsTriggeredList corresponding to a respective measurement identifier within the Var variable;

For example, if the reporting type is not the event-based reporting (such as periodical reporting), or the reporting type is the event-based reporting and the reporting event is event H1 or event H2 (or other height-based measurement reporting events), an applicable cell is included, and the applicable cell may be an applicable cell for which the new measurement result becomes available since last periodical reporting, measurement initiation or measurement reset.

For example, 1> if there is at least one applicable neighboring cell to report:

2> if the reportType is set to eventTriggered or periodical:

3> set the measResultNeighCells to include the best neighboring cells up to maxReportCells in accordance with the following:

4> if the reportType is set to eventTriggered and eventId is not set to eventH1 and/or eventH2:

5> include the cells included in the cellsTriggeredList as defined within the VarMeasReportList for this measId;

4>else

5> include the applicable cells for which the new measurement results became available since the last periodical reporting or since the measurement was initiated or reset.

In some embodiments, if there is an applicable cell to be reported by the terminal, and if the reporting type is set to event-based reporting or periodical reporting, measurement results of neighboring cells are set to include best neighboring cells up to a maximum reporting cell number:

For example, if the reporting type is set to the event-based reporting, measurement results of neighboring cells include cells in a cellsTriggeredList corresponding to a respective measurement identifier within the Var variable; and/or

if the reporting type is set to the event-based reporting, and the event is event H1 or event H2 (or other height-based measurement reporting events); or the reporting type is set to periodical reporting, an applicable cell is included, where the applicable cell may be an applicable cell for which the new measurement result becomes available since last periodical reporting, measurement initiation or measurement reset.

For example, 1> if there is at least one applicable neighboring cell to report:

2> if the reportType is set to eventTriggered or periodical:

3> set the measResultNeighCells to include the best neighboring cells up to maxReportCells in accordance with the following:

4> if the reportType is set to eventTriggered:

5> include the cells included in the cellsTriggeredList as defined within the VarMeasReportList for this measId;

4> or, if the reportType is set to eventTriggered and eventID is set to eventH1 or eventH2, or if the reportType is set to periodical:

5> include the applicable cells for which the new measurement results became available since the last periodical reporting or since the measurement was initiated or reset.

In some embodiments, the content of the first measurement report also includes a cell identifier and/or a measurement result corresponding to a cell.

For example, for the second number of cells included in the content of the first measurement report, cell identifiers and/or corresponding measurement results of the second number of cells are included in the content of the first measurement report.

The measurement result of the non-serving cell included in the first measurement report includes the cell identifiers and/or corresponding measurement results of the second number of cells.

In embodiments of the present invention, the content of the first measurement report includes X neighboring cells with best measurement results in applicable cells, where X is an integer.

For example, the measurement results of neighboring cells included in the content of the first measurement report include measurement results of X neighboring cells with best measurement results among the applicable cells, which are then reported to the network device.

For example: the second number is configured by the network device, specified by a protocol, or determined by the terminal depending on implementation.

In embodiments of the present invention, in the case where the height-based measurement reporting event is satisfied, the terminal reports the first measurement report to the network device, and the content of the first measurement report includes one or more cells in the applicable cells and a cell identifier corresponding to each of the one or more cells.

In embodiments of the present invention, in the case where the height-based measurement reporting event is satisfied, the terminal reports the first measurement report to the network device, and the content of the first measurement report includes one or more cells in the applicable cells and a measurement result corresponding to each of the one or more cells.

In embodiments of the present invention, in the case where the height-based measurement reporting event is satisfied, the terminal reports the first measurement report to the network device, and the content of the first measurement report includes the second number of cells with best measurement results in the applicable cells and a cell identifier corresponding to each of the second number of cells.

In embodiments of the present invention, in the case where the height-based measurement reporting event is satisfied, the terminal reports the first measurement report to the network device, and the content of the first measurement report includes the second number of cells with best measurement results in the applicable cells and a measurement result corresponding to each of the second number of cells.

It should be noted that the above embodiments are not exhaustive, but are only examples of some embodiments, and the above embodiments may be implemented individually or in combination, which will not be specifically limited by embodiments of the present invention.

In some embodiments, in response to an event triggering the measurement reporting not being the height-based measurement reporting event, the terminal reports a second measurement report to the network device, a content of the second measurement report includes one or more cells in a second cellsTriggeredList, and the second cellsTriggeredList is determined in a case where the measurement reporting is triggered by the event which is not the height-based measurement reporting event. It should be understood that the event triggering the measurement reporting is not the height-based measurement reporting event, that is, the event triggering the measurement reporting is a non-height-based measurement reporting event.

In embodiments of the present invention, in the case where the event triggering the measurement reporting is not the height-based measurement reporting event, the terminal reports the second measurement report to the network device, the content of the second measurement report includes one or more cells in the second cellsTriggeredList, and the second cellsTriggeredList is determined in the case where the measurement reporting is triggered by the event which is not the height-based measurement reporting event.

For example, when the event triggering the measurement reporting is event A1, the terminal reports the second measurement report to the network device, the content of the second measurement report includes one or more cells in the second cellsTriggeredList, and the second cellsTriggeredList is determined in the case where the measurement reporting is triggered by the event A1 which is not the height-based measurement reporting event. For example, in the case where the event A1 is satisfied, the terminal generates the second cellsTriggeredList, thereby determining the second cellsTriggeredList.

In some embodiments, the content of the second measurement report also includes a cell identifier and/or a measurement result corresponding to a cell.

For example, for the case where the content of the second measurement report includes one or more cells in the second cellsTriggeredList, cell identifiers and/or corresponding measurement results of the one or more cells in the second cellsTriggeredList are included in the content of the second measurement report.

In embodiments of the present invention, the content of the second measurement report includes X best neighboring cells in the second cellsTriggeredList, where X is an integer.

For example, measurement results of neighboring cells included in the content of the second measurement report include measurement results of the X best neighboring cells in the second cellsTriggeredList, which are then reported to the network device.

For example: the number of cells in the second cellsTriggeredList included in the content of the second measurement report is configured by the network device, specified by a protocol, or determined by the terminal depending on implementation.

In embodiments of the present invention, in the case where the event triggering the measurement reporting is not the height-based measurement reporting event, the second measurement report is reported to the network device, and the content of the second measurement report includes one or more cells in the second cellsTriggeredList and the cell identifier corresponding to each of the one or more cells.

In embodiments of the present invention, in the case where the event triggering the measurement reporting is not the height-based measurement reporting event, the second measurement report is reported to the network device, and the content of the second measurement report includes one or more cells in the second cellsTriggeredList and the measurement result corresponding to each of the one or more cells.

It should be noted that the above embodiments are not exhaustive, but are only examples of some embodiments, and the above embodiments may be implemented individually or in combination, which will not be specifically limited by embodiments of the present invention.

In some embodiments, the terminal may determine an allowed cell list, for example, the terminal may determine the allowed cell list according to an indication from the network device. In the case where the network device indicates a use allowed cell list (for example, the network device configures useAllowedCellList to be true), the terminal may determine that the applicable cell is a cell in the allowed cell list.

In some embodiments, the terminal may determine an allowed cell list and an excluded cell list, for example, the terminal may determine the allowed cell list and the excluded cell list according to an indication from the network device. In the case where the network device indicates a use allowed cell list (for example, the network device configures useAllowedCellList to be true), the terminal may determine that the applicable cell is a cell in the allowed cell list, or in the case where the network device does not indicates the use allowed cell list (for example, the network device does not configure useAllowedCellList to be true), the terminal may determine that the applicable cell is not a cell in the excluded cell list.

In some embodiments, the configuration information includes at least one of:

information for indicating whether to report a measurement result of a non-serving cell;
a maximum number of non-serving cells included in the first measurement report;
a first threshold corresponding to non-serving cells included in the first measurement report;
configuration for the height-based measurement reporting event; or
configuration for a measurement object.

One or more of the information for indicating whether to report a measurement result of a non-serving cell; the maximum number of non-serving cells included in the first measurement report; the first threshold corresponding to non-serving cells included in the first measurement report; or the configuration for the height-based measurement reporting event may be included in the reporting configuration, such as reportConfig.

In embodiments of the present invention, the configuration information includes information for indicating whether to include a measurement result of a non-serving cell.

In embodiments of the present invention, the configuration information includes an indication of the maximum number of non-serving cells included in the first measurement report.

For example, this number may be 0, indicating that the measurement result of the non-serving cell is not included.

For example, this number may be 1 to N, indicating that measurement results of at most M non-serving cells may be included, where N is an integer greater than 1, and $1 \leq M \leq N$. N may be the maximum configurable number that may be specified by a protocol, configured by the network device, or determined by the terminal depending on implementation.

In embodiments of the present invention, the configuration information includes a threshold requirement for the non-serving cells included in the first measurement report.

In embodiments of the present invention, the configuration information includes the configuration for the height-based measurement reporting event, and the height-based measurement reporting event includes but is not limited to one or more of event H1 or event H2.

In embodiments of the present invention, the terminal receives the configuration information sent by the network device; the configuration information includes the information for indicating whether to report a measurement result of a non-serving cell, and the terminal may determine the content of the first measurement report of the height-based triggered measurement reporting according to the configuration information.

In a case where the configuration information includes the information for indicating whether to report a measurement result of a non-serving cell, and the information for indicating whether to report a measurement result of a non-serving cell indicates to report a measurement result of a non-serving cell, the terminal may determine according to the configuration information that the content of the first measurement report of the height-based triggered measurement reporting includes a measurement result of a non-serving cell.

In a case where the configuration information includes the information for indicating whether to report a measurement result of a non-serving cell, and the information for indicating whether to report a measurement result of a non-serving cell indicates not to report a measurement result of a non-serving cell, the terminal may determine according to the configuration information that the content of the first measurement report of the height-based triggered measurement reporting does not include a measurement result of a non-serving cell.

In embodiments of the present invention, the terminal receives the configuration information sent by the network device; the configuration information includes the indication of the maximum number of non-serving cells included in the first measurement report, and the terminal may determine according to the configuration information that the content of the first measurement report of the height-based triggered measurement reporting includes at most the maximum number of non-serving cells.

In embodiments of the present invention, the terminal receives the configuration information sent by the network device; the configuration information includes the first threshold corresponding to non-serving cells included in the first measurement report, and the terminal may determine according to the configuration information that the content of the first measurement report of the height-based triggered measurement reporting includes a non-serving cell that meets the requirement of the first threshold.

In embodiments of the present invention, the terminal receives the configuration information sent by the network device; the configuration information includes the configuration for the height-based measurement reporting event, and the terminal may determine the content of the first measurement report of the height-based triggered measurement reporting according to the configuration for the height-based measurement reporting event.

In embodiments of the present invention, the terminal receives the configuration information sent by the network device; the configuration information includes the configuration for the measurement object, and the terminal may determine, according to the configuration for the height-based measurement reporting event, the content of the first measurement report of the height-based triggered measurement reporting that is associated with the configuration for the measurement object.

It should be noted that the above embodiments are not exhaustive, but are only examples of some embodiments, and the above embodiments may be implemented individually or in combination, which will not be specifically limited by embodiments of the present invention.

In some embodiments, the height-based measurement reporting event includes at least one of:

event H1, representing that a height of the terminal is higher than a second threshold; or
event H2, representing that a height of the terminal is lower than a second threshold.

In embodiments of the present invention, the configuration information includes the configuration for the height-based measurement reporting event, the height-based measurement reporting event includes the event H1, and the event H1 represents that the height of the terminal is higher than the second threshold.

In embodiments of the present invention, the configuration information includes the configuration for the height-based measurement reporting event, the height-based measurement reporting event includes the event H2, and the event H2 represents that the height of the terminal is lower than the second threshold.

The terminal includes but is not limited to one or more of a UAV terminal, an aerial terminal, or a flight terminal, which are not limited in the present invention.

In some embodiments, determining, by the terminal, the content of the first measurement report of the height-based triggered measurement reporting according to the configuration information includes: determining the content of the first measurement report of the height-based triggered measurement reporting according to the configuration information, in response to the configuration information including the information for indicating whether to report a measurement result of a non-serving cell, and the information for indicating whether to report a measurement result of a non-serving cell indicating to report a measurement result of a non-serving cell, where the content of the first measurement report includes a measurement result of a non-serving cell.

In embodiments of the present invention, in a case where the configuration information includes the information for indicating whether to report a measurement result of a non-serving cell, and the information for indicating whether to report a measurement result of a non-serving cell indicates to report a measurement result of a non-serving cell, the terminal determines the content of the first measurement report of the height-based triggered measurement reporting according to the configuration information, where the content of the first measurement report includes a measurement result of a non-serving cell.

In some embodiments, determining, by the terminal, the content of the first measurement report of the height-based triggered measurement reporting according to the configuration information includes: determining the content of the first measurement report of the height-based triggered measurement reporting according to the configuration information, in response to the configuration information includes that the maximum number of non-serving cells included in the first measurement report is a third number, where the content of the first measurement report includes at most measurement results of the third number of non-serving cells, and the third number is an integer.

In embodiments of the present invention, in a case where the configuration information includes that the maximum number of non-serving cells included in the first measurement report is the third number, the terminal determines the content of the first measurement report of the height-based triggered measurement reporting according to the configuration information, where the content of the first measurement report includes at most the measurement results of the third number of non-serving cells, and the third number is an integer.

For example, the third number is 2. In a case where the configuration information includes that the maximum number of non-serving cells included in the first measurement report is 2, the terminal determines the content of the first measurement report of the height-based triggered measurement reporting according to the configuration information, where the content of the first measurement report includes measurement results of at most 2 non-serving cells.

As an example, the above first number and/or second number may be determined according to the third number.

In some embodiments, determining, by the terminal, the content of the first measurement report of the height-based triggered measurement reporting according to the configuration information includes: determining the content of the first measurement report of the height-based triggered measurement reporting according to the configuration information, in response to the configuration information including the first threshold corresponding to non-serving cells included in the first measurement report.

The content of the first measurement report includes at least one of:

a measurement result of a non-serving cell whose measurement result is greater than the first threshold; or
a measurement result of a non-serving cell whose measurement result is less than the first threshold.

In embodiments of the present invention, in a case where the configuration information includes the first threshold corresponding to non-serving cells included in the first measurement report, the terminal determines the content of the first measurement report of the height-based triggered measurement reporting according to the configuration information, and the content of the first measurement report includes the measurement result of the non-serving cell whose measurement result is greater than the first threshold.

In embodiments of the present invention, in a case where the configuration information includes the first threshold corresponding to non-serving cells included in the first measurement report, the terminal determines the content of the first measurement report of the height-based triggered measurement reporting according to the configuration information, and the content of the first measurement report includes the measurement result of the non-serving cell whose measurement result is lower than the first threshold.

The non-serving cell may be an applicable cell, which is a neighboring cell detectable by the terminal. For example, the applicable cell is a neighboring cell that can be detected by the terminal on a frequency corresponding to the configuration information sent by the network device.

The terminal may also add the non-serving cell whose measurement result is less than the first threshold to a cellsTriggeredList.

In embodiments of the present invention, the measurement result of the non-serving cell included in the content of the first measurement report is greater than the threshold.

In embodiments of the present invention, the measurement result of the non-serving cell included in the content of the first measurement report is less than the threshold.

Reference information corresponding to the measurement result may be SSB and/or CSI-RS, and the measurement quantity may be any one of RSRP, RSRQ, or SINR.

In embodiments of the present invention, in the case where the height-based measurement reporting event is satisfied, the terminal adds an applicable cell that meets the threshold configured by the network device into the cellsTriggeredList.

In embodiments of the present invention, in a case where the reporting event is the height-based measurement reporting event, and the height-based measurement reporting event is satisfied, the terminal may add an applicable cell that meets the threshold configured by network device into the measurement result of the non-serving cell included in the content of the first measurement report.

For example, if the reporting event is the height-based measurement reporting event, X best neighboring cells in applicable cells that meet the threshold configured by the network device are included in the measurement result.

It should be noted that the above embodiments are not exhaustive, but are only examples of some embodiments, and the above embodiments may be implemented individually or in combination, which will not be specifically limited by embodiments of the present invention.

In embodiments of the present invention, the reference information corresponding to the measurement result may be a synchronization signal block (SSB) and/or a channel state information-reference signal (CSI-RS), and the measurement quantity may be any one of reference signal received power (RSRP), reference signal received quality (RSRQ), or signal to interference plus noise ratio (SINR).

For example, the content of the first measurement report includes the measurement result of the non-serving cell, which may be that the content of the first measurement report includes the RSRP of the SSB of the non-serving cell, or includes the RSRQ of the SSB of the non-serving cell, or includes the SINR of the SSB of the non-serving cell, or includes the RSRP of the CSI-RS of the non-serving cell, or includes the RSRQ of the CSI-RS of the non-serving cell, or includes the SINR of the CSI-RS of the non-serving cell.

For example, the content of the first measurement report includes the measurement result of the non-serving cell whose measurement result is greater than the first threshold, which may be that the content of the first measurement report includes the measurement result of the non-serving cell with the RSRP of the SSB greater than the first threshold, or includes the measurement result of the non-serving cell with the RSRP of the CSI-RS greater than the first threshold.

For example, the content of the first measurement report includes the measurement result of the non-serving cell whose measurement result is greater than the first threshold, which may be that the content of the first measurement report includes the measurement result of the non-serving cell with the RSRQ of the SSB greater than the first threshold, or includes the measurement result of the non-serving cell with the RSRQ of the CSI-RS greater than the first threshold.

For example, the content of the first measurement report includes the measurement result of the non-serving cell whose measurement result is greater than the first threshold, which may be that the content of the first measurement report includes the measurement result of the non-serving cell with the SINR of the SSB greater than the first threshold, or includes the measurement result of the non-serving cell with the SINR of the CSI-RS greater than the first threshold.

For example, the content of the first measurement report includes the measurement result of the non-serving cell whose measurement result is less than the first threshold, which may be that the content of the first measurement report includes the measurement result of the non-serving cell with the RSRP of the SSB less than the first threshold, or includes the measurement result of the non-serving cell with the RSRP of the CSI-RS less than the first threshold.

For example, the content of the first measurement report includes the measurement result of the non-serving cell whose measurement result is less than the first threshold, which may be that the content of the first measurement report includes the measurement result of the non-serving cell with the RSRQ of the SSB less than the first threshold, or includes the measurement result of the non-serving cell with the RSRQ of the CSI-RS less than the first threshold.

For example, the content of the first measurement report includes the measurement result of the non-serving cell whose measurement result is less than the first threshold, which may be that the content of the first measurement report includes the measurement result of the non-serving cell with the SINR of the SSB less than the first threshold, or includes the measurement result of the non-serving cell with the SINR of the CSI-RS less than the first threshold.

It should be noted that the above embodiments are not exhaustive, but are only examples of some embodiments, and the above embodiments may be implemented individually or in combination, which will not be specifically limited by embodiments of the present invention.

In some embodiments, determining, by the terminal, the content of the first measurement report of the height-based triggered measurement reporting according to the configuration information includes: determining the content of the first measurement report of the height-based triggered measurement reporting according to the configuration information, in response to the configuration information including the information for indicating whether to report a measurement result of a non-serving cell, and the information for indicating whether to report a measurement result of a non-serving cell indicating not to report a measurement result of a non-serving cell, where the content of the first measurement report does not include a measurement result of a non-serving cell; or determining the content of the first measurement report of the height-based triggered measurement reporting according to the configuration information, in response to the configuration information including that the maximum number of non-serving cells included in the first measurement report is a third number, and the third number being 0, where the content of the first measurement report does not include a measurement result of a non-serving cell.

In embodiments of the present invention, in a case where the configuration information includes the information for indicating whether to report a measurement result of a non-serving cell, and the information for indicating whether to report a measurement result of a non-serving cell indicates not to report a measurement result of a non-serving cell, the terminal determines the content of the first measurement report of the height-based triggered measurement reporting according to the configuration information, and the content of the first measurement report does not include a measurement result of a non-serving cell.

In embodiments of the present invention, in a case where the configuration information includes that the maximum number of non-serving cells included in the first measurement report is the third number, and the third number is 0, the terminal determines the content of the first measurement report of the height-based triggered measurement reporting according to the configuration information, and the content of the first measurement report does not include a measurement result of a non-serving cell.

In embodiments of the present invention, if the configuration information includes the information for indicating whether to report a measurement result of a non-serving cell, and the information for indicating whether to report a measurement result of a non-serving cell indicates not to report a measurement result of a non-serving cell, or if the configuration information includes that the maximum number of non-serving cells included in the first measurement report is the third number, and the third number is 0, the content of the first measurement report reported by the terminal to the network device does not include a measurement result of a non-serving cell.

In some embodiments, the content of the first measurement report includes at least one of:

a measurement result of a neighboring cell newly available since last measurement reporting;
a measurement result of a neighboring cell newly available since measurement initiation; or
a measurement result of a neighboring cell newly available since measurement reset.

In embodiments of the present invention, the terminal determines the content of the first measurement report of the height-based triggered measurement reporting according to the configuration information, where the content of the first measurement report includes the measurement result of the non-serving cell, and the content of the first measurement report includes the measurement result of the neighboring cell newly available since the last measurement reporting.

In embodiments of the present invention, the terminal determines the content of the first measurement report of the height-based triggered measurement reporting according to the configuration information, where the content of the first measurement report includes the measurement result of the non-serving cell, and the content of the first measurement report includes the measurement result of the neighboring cell newly available since the measurement initiation.

In embodiments of the present invention, the terminal determines the content of the first measurement report of the height-based triggered measurement reporting according to the configuration information, where the content of the first measurement report includes the measurement result of the non-serving cell, and the content of the first measurement report includes the measurement result of the neighboring cell newly available since the measurement reset.

It should be noted that the above embodiments are not exhaustive, but are only examples of some embodiments, and the above embodiments may be implemented individually or in combination, which will not be specifically limited by embodiments of the present invention.

In some embodiments, the configuration information includes information for indicating, to the terminal, whether to trigger the measurement reporting when the leaving condition for the height-based measurement reporting event is satisfied; or the configuration information does not include indication information for indicating, to the terminal, whether to trigger the measurement reporting when the leaving condition for the height-based measurement reporting event is satisfied.

In embodiments of the present invention, the terminal receives the configuration information sent by the network device, and the configuration information includes the information for indicating, to the terminal, whether to trigger the measurement reporting when the leaving condition for the height-based measurement reporting event is satisfied.

In embodiments of the present invention, the terminal determines to trigger the measurement reporting according to the configuration information sent by the network device, and the configuration information includes reporting configuration.

The reporting configuration includes the configuration for the height-based measurement reporting event and the indication information. The indication information indicates, to the terminal, whether to initiate the measurement reporting when the leaving condition is satisfied.

The leaving condition is the leaving condition for the height-based measurement reporting event.

In embodiments of the present invention, the indication information may be included in the configuration for the height-based measurement reporting event, or may be included in the corresponding reporting configuration.

For example, the indication information may be: ReportOnLeave.

In embodiments of the present invention, in the case where the leaving condition for the height-based measurement reporting event is satisfied, if the indication information is set to a specific value (for example, true), the terminal triggers the measurement reporting.

The indication information is indication information included in the configuration information for he reporting event corresponding to the leaving condition which is satisfied by the terminal.

The indication information is indication information included in the corresponding reporting configuration for the reporting event corresponding to the leaving condition which is satisfied by the terminal.

In embodiments of the present invention, in the case where the leaving condition for the height-based measurement reporting event is satisfied, if the indication information is configured (or included), the terminal triggers the measurement reporting.

The indication information is configured or included, which means that the indication information is configured or included in the configuration information for the reporting event corresponding to the leaving condition which is satisfied by the terminal.

The indication information is configured or included, which means that the indication information is configured or included in the corresponding reporting configuration for the reporting event corresponding to the leaving condition which is satisfied by the terminal.

It may be understood that the terminal receives the configuration information sent by the network device, and the configuration information includes the information for indicating, to the terminal, whether to trigger the measurement reporting when the leaving condition for the height-based measurement reporting event is satisfied. The terminal may determine, according to the configuration information, whether to trigger the measurement reporting and whether need to report the measurement report to the network device in the case where the leaving condition for the height-based report triggering event is satisfied.

For example, the configuration information includes the information for indicating, to the terminal, whether to trigger the measurement reporting when the leaving condition for the height-based measurement reporting event is satisfied. The configuration information may include first indication information, and the first indication information indicates, to the terminal, to trigger the measurement reporting when the leaving condition for the height-based measurement reporting event is satisfied.

In this case, based on the configuration information, the terminal may determine to trigger the measurement reporting and determine to report the measurement report to the network device, in the case where the leaving condition for the height-based report triggering event is satisfied.

For example, the configuration information includes the information for indicating, to the terminal, whether to trigger the measurement reporting when the leaving condition for the height-based measurement reporting event is satisfied. The configuration information may include second indication information for indicating, to the terminal, not to trigger the measurement reporting when the leaving condition for the height-based measurement reporting event is satisfied.

In this case, based on the configuration information, the terminal may determine not to trigger the measurement reporting and determine not to report the measurement report to the network device, in the case where the leaving condition for the height-based report triggering event is satisfied.

In embodiments of the present invention, the terminal receives the configuration information sent by the network device, and the configuration information does not include the indication information for indicating, to the terminal, whether to trigger the measurement reporting when the leaving condition for the height-based measurement reporting event is satisfied.

It may be understood that the terminal receives the configuration information sent by the network device, in the case where the configuration information does not include the indication information for indicating, to the terminal, whether to trigger the measurement reporting when the leaving condition for the height-based measurement reporting event is satisfied, the terminal may determine not to trigger the measurement reporting and determine there is no need to report the measurement report to the network device, in the case where the leaving condition for the height-based report triggering event is satisfied.

In some embodiments, determining, by the terminal, whether to trigger the measurement reporting according to the configuration information in response to the leaving condition for the height-based measurement reporting event being satisfied includes: triggering the measurement reporting and reporting a third measurement report to the network device, in response to the leaving condition for the height-based measurement reporting event being satisfied and the configuration information including first indication information, where the first indication information is configured to indicate, to the terminal, to trigger the measurement reporting when the leaving condition for the height-based measurement reporting event is satisfied; or triggering the measurement reporting and reporting a third measurement report to the network device, in response to the leaving condition for the height-based measurement reporting event being satisfied, the configuration information including second indication information, and the second indication information being a specific value, where the second indication information being the specific value indicates, to the terminal, to trigger the measurement reporting when the leaving condition for the height-based measurement reporting event is satisfied.

In some embodiments, determining, by the terminal, whether to trigger the measurement reporting according to the configuration information in response to the leaving condition for the height-based measurement reporting event being satisfied includes: not triggering the measurement reporting, in response to the leaving condition for the height-based measurement reporting event being satisfied and the configuration information not including first indication information, where the first indication information is configured to indicate, to the terminal, to trigger the measurement reporting when the leaving condition for the height-based measurement reporting event is satisfied; or not triggering the measurement reporting, in response to the leaving condition for the height-based measurement reporting event being satisfied, the configuration information including second indication information, and the second indication information not being a specific value, where the second indication information being the specific value indicates, to the terminal, to trigger the measurement reporting when the leaving condition for the height-based measurement reporting event is satisfied.

The first indication information and/or the second indication information may be ReportOnLeave.

In embodiments of the present invention, in the case where the leaving condition for the height-based measurement reporting event is satisfied, and the configuration information includes the first indication information, the terminal triggers the measurement reporting and reports the third measurement report to the network device. The first indication information is configured to indicate, to the terminal, to trigger the measurement reporting when the leaving condition for the height-based measurement reporting event is satisfied.

In embodiments of the present invention, in the case where the leaving condition for the height-based measurement reporting event is satisfied, and the configuration information does not include the first indication information, the terminal does not trigger the measurement reporting. The first indication information is configured to indicate, to the terminal, to trigger the measurement reporting when the leaving condition for the height-based measurement reporting event is satisfied.

For example, the first indication information may be a signaling or a message sent by the network device to the terminal in the related art, which is not specifically limited in embodiments of the present invention.

In embodiments of the present invention, in the case where the leaving condition for the height-based measurement reporting event is satisfied, the configuration information includes the second indication information, and the second indication information is the specific value, the terminal triggers the measurement reporting and reports the third measurement report to the network device. The second indication information being the specific value indicates, to the terminal, to trigger the measurement reporting when the leaving condition for the height-based measurement reporting event is satisfied.

In embodiments of the present invention, in the case where the leaving condition for the height-based measurement reporting event is satisfied, the configuration information includes the second indication information, and the second indication information is not the specific value, the terminal does not trigger the measurement reporting. The second indication information being the specific value indicates, to the terminal, to trigger the measurement reporting when the leaving condition for the height-based measurement reporting event is satisfied.

For example, the second indication information may be 1 bit. When the second indication information is a specific value of 1, the terminal may determine to trigger the measurement reporting and report the third measurement report to the network device.

For example, the second indication information may be 1 bit. When the second indication information is not the specific value of 1, the terminal may determine not to trigger the measurement reporting.

For example, when the second indication information is a specific value (for example, true), the terminal may determine to trigger the measurement reporting and report the third measurement report to the network device.

For example, when the second indication information is not the specific value (for example, true), the terminal may determine not to trigger the measurement reporting.

In some embodiments, the terminal stops a periodical reporting timer corresponding to a measurement identifier associated with reporting configuration corresponding to the height-based measurement reporting event, in response to the leaving condition for the height-based measurement reporting event being satisfied.

In embodiments of the present invention, in the case where the leaving condition for the height-based measurement reporting event is satisfied, the terminal stops the periodical reporting timer corresponding to the measurement identifier associated with the reporting configuration corresponding to the height-based measurement reporting event.

It may be understood that when the leaving condition for the height-based measurement reporting event is satisfied, it means that the height of the terminal does not meet the requirement of the threshold at this time, stopping the periodical reporting timer corresponding to the measurement identifier associated with the reporting configuration corresponding to the height-based measurement reporting event at this time may avoid triggering of the measurement reporting when the periodical reporting timer expires, which may improve the reliability of mobility management.

In some embodiments, for each measurement Id stored by the terminal, if the corresponding reporting type is set to eventTriggered, and the event is the height-based measurement reporting event, and if a leaving condition applicable to this event is satisfied during a corresponding trigger time, one or more of the following steps is performed:

initiating the measurement reporting procedure if the first indication information is configured in the corresponding reporting configuration or the value of the second indication information is the specific value;
deleting the measurement reporting entry corresponding to this measurement Id in the measurement reporting list; or
stopping the periodical reporting timer for this measurement Id (if it is running).

For example,

1> for each measId included in the measIdList within VarMeasConfig:

2> if the reportType is set to eventTriggered and if the eventId is set to eventH1 or eventH2 and if the leaving condition applicable for this event, i.e. the event corresponding with the eventID of the corresponding reportConfig within VarMeasConfig, is fulfilled during timeToTrigger defined within the VarMeasConfig for this event:

3> if ReportOnLeave is set to true for the corresponding reporting configuration:

4> initiate the measurement reporting procedure;

3> remove the measurement reporting entry within the VarMeasReportList for this measId;
3> stop the periodical reporting timer for this measId, if running.

In embodiments of the present invention, the configuration information sent by the network device to the terminal includes the reporting configuration, which includes configuration for the height-based measurement reporting event.

In embodiments of the present invention, the terminal stops the periodical reporting timer when the leaving condition for the height-based measurement reporting event is satisfied.

The periodical reporting timer stopped is a periodical reporting timer corresponding to the measurement identifier associated with the reporting configuration corresponding to this measurement reporting event.

In embodiments of the present invention, if the height-based triggered measurement reporting is configured by the network device, the maximum number of reporting is 1.

In embodiments of the present invention, if the height-based triggered measurement reporting is configured by the network device, it is not supported to configure ReportOnLeave.

Referring to FIG. 4, FIG. 4 is a schematic flowchart of another method for measurement reporting according to embodiments of the present invention.

As shown in FIG. 4, the method is performed by a terminal, and the method may include but is not limited to the following steps:

In S41, configuration information sent by a network device is received.
In S42, a content of a first measurement report of height-based triggered measurement reporting is determined according to the configuration information.
For the relevant descriptions of S41 and S42, reference may be made to the relevant descriptions in the above embodiments and will not be described again here.
In S43, in response to the height-based measurement reporting event being satisfied, the first measurement report is reported to the network device, and the content of the first measurement report includes a measurement result of a non-serving cell.

It may be understood that in the height-based triggered measurement reporting, when a reporting condition is satisfied, since the triggering of the height-based triggered measurement reporting is triggered by the height of the terminal itself and has nothing to do with the neighboring cell, there is no cell that meets the event, which results in that the terminal will not report the measurement result of the neighboring cell when the height-based measurement event is satisfied. As a result, the network device cannot know the signal strength of the neighboring cell when the terminal is at the corresponding height, and thus cannot optimize the mobility configuration of the terminal based thereon, or cannot perform corresponding interference elimination, so cannot determine the wireless environment of the terminal at a certain height.

For this, in embodiments of the present invention, the terminal determines the content of the first measurement report of the height-based triggered measurement reporting according to the configuration information sent by the network device, where the content of the first measurement report includes the measurement result of the non-serving cell. In a case where the height-based measurement reporting event is satisfied, the terminal reports the first measurement report to the network device, where the content of the first measurement report includes the measurement result of the non-serving cell. In this way, the network device may optimize the mobility configuration of the terminal or perform corresponding interference elimination based on the measurement result of the non-serving cell reported by the terminal to realize the mobility enhancement.

It should be noted that in embodiments of the present invention, S41 to S43 may be performed alone or in combination with any other step in embodiments of the present invention, for example, in combination with S31 and S32 in embodiments of the present invention, which will not be specifically limited in embodiments of the present invention.

By implementing embodiments of the present invention, the terminal receives the configuration information sent by the network device, determines the content of the first measurement report of the height-based triggered measurement reporting according to the configuration information, and reports the first measurement report to the network device, in response to the height-based measurement reporting event being satisfied, where the content of the first measurement report includes the measurement result of the non-serving cell. In this way, the terminal may determine to trigger the reporting of the measurement result of the non-serving cell according to the configuration information, so that the network device may optimize the mobility configuration of the terminal to realize the mobility enhancement.

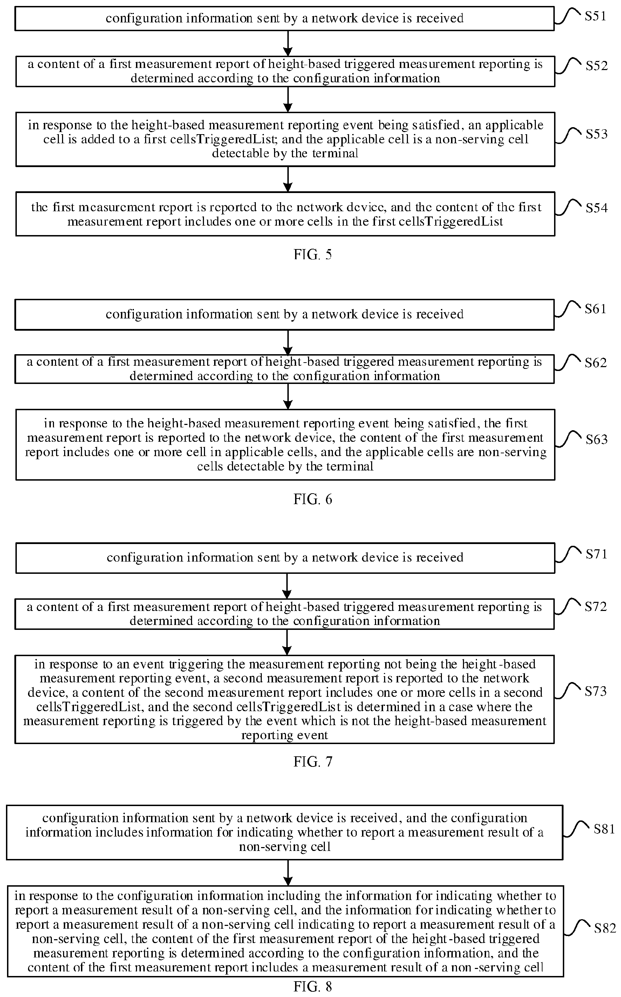

Referring to FIG. 5, FIG. 5 is a schematic flowchart of yet another method for measurement reporting according to embodiments of the present invention.

As shown in FIG. 5, the method is performed by a terminal, and the method may include but is not limited to the following steps:

In S51, configuration information sent by a network device is received.

In S52, a content of a first measurement report of height-based triggered measurement reporting is determined according to the configuration information.

For the relevant descriptions of S51 and S52, reference may be made to the relevant descriptions in the above embodiments and will not be described again here.

In S53, in response to the height-based measurement reporting event being satisfied, an applicable cell is added to a first cellsTriggeredList; and the applicable cell is a non-serving cell detectable by the terminal.

In embodiments of the present invention, in the case where the height-based measurement reporting event is satisfied, the terminal adds the applicable cell to the first cellsTriggeredList.

The height-based measurement reporting event includes one or more of event H1 or event H2.

In embodiments of the present invention, the applicable cell is a non-serving cell detectable by the terminal. For example, the applicable cell is a non-serving cell detectable by the terminal on a frequency corresponding to the configuration information sent by the network device.

In embodiments of the present invention, the first cellsTriggeredList is stored by the terminal.

In S54, the first measurement report is reported to the network device, and the content of the first measurement report includes one or more cells in the first cellsTriggeredList.

In embodiments of the present invention, in the case where the height-based measurement reporting event is satisfied, the terminal adds the applicable cell to the first cellsTriggeredList, and then may report the first measurement report to the network device, where the content of the first measurement report includes one or more cells in the first cellsTriggeredList.

In some embodiments, the content of the first measurement report includes a first number of cells with best measurement results in the first cellsTriggeredList, where the first number is an integer.

In embodiments of the present invention, in embodiments of the present invention, in the case where the height-based measurement reporting event is satisfied, the terminal adds the applicable cell to the first cellsTriggeredList, and then may report the first measurement report to the network device, and the content of the first measurement report includes the first number of cells with best measurement results in the first cellsTriggeredList, where the first number is an integer.

For example, the first number is 3. In the case where the height-based measurement reporting event is satisfied, the terminal adds the applicable cell to the first cellsTriggeredList, and then may report the first measurement report to the network device, and the content of the first measurement report includes 3 cells with best measurement results in the first cellsTriggeredList.

Of course, the above example is only for illustration, and the first number may be other integer other than 3, and may be set as needed, which is not specifically limited in embodiments of the present invention.

In embodiments of the present invention, the terminal may determine the first number depending on implementation, or according to an indication from the network device, or according to a protocol, etc., which is not limited by embodiments of the present invention.

In some embodiments: for each measurement Id stored by the terminal, if the corresponding reporting type is set to eventTriggered, and the event is the height-based measurement reporting event, and if an entering condition applicable to this event is satisfied during a corresponding trigger time, one or more of the following steps is performed:

> including an entry corresponding to this measurement Id in a table that stores measurement reporting;
> including applicable cell(s) in a corresponding cellsTriggeredList;
> setting the number of reporting corresponding to this measurement identifier to 0; or
> initiating a measurement reporting procedure.

For example,

> 1> for each measId included in the measIdList within VarMeasConfig:

>> 2> if the reportType is set to eventTriggered and if the eventId is set to eventH1 or eventH2 and if the entering condition applicable for this event, i.e. the event corresponding with the eventID of the corresponding reportConfig within VarMeasConfig, is fulfilled during timeToTrigger defined within the VarMeasConfig for this event, one or more of the following steps is performed:
>> Possibly, it also needs to determine whether VarMeasReportList includes a measurement reporting entry for this measId: If no, perform one or more of the following steps, otherwise, do not perform one or more of the following steps:

>>> 3>include a measurement reporting entry within the VarMeasReportList for this measId;
>>> include the applicable cell(s) in the cellsTriggeredList defined within the VarMeasReportList for this measId;
>>> 3>set the numberOfReportsSent defined within the VarMeasReportList for this measId to 0;
>>> 3>initiate the measurement reporting procedure.

In some embodiments, the content of the first measurement report further includes a cell identifier and/or a measurement result corresponding to a cell.

In embodiments of the present invention, in the case where the height-based measurement reporting event is satisfied, the terminal adds the applicable cell to the first cellsTriggeredList, and then may report the first measurement report to the network device, where the content of the first measurement report includes one or more cells in the first cellsTriggeredList and the identifier corresponding to each of the one or more cells.

In embodiments of the present invention, in the case where the height-based measurement reporting event is satisfied, the terminal adds the applicable cell to the first cellsTriggeredList, and then may report the first measurement report to the network device, where the content of the first measurement report includes one or more cells in the first cellsTriggeredList and the measurement result corresponding to each of the one or more cells.

In embodiments of the present invention, in the case where the height-based measurement reporting event is satisfied, the terminal adds the applicable cell to the first cellsTriggeredList, and then may report the first measurement report to the network device, and the content of the first measurement report includes the first number of cells with best measurement results in the first cellsTriggeredList and the cell identifier corresponding to each of the first number of cells.

In embodiments of the present invention, in the case where the height-based measurement reporting event is satisfied, the terminal adds the applicable cell to the first cellsTriggeredList, and then may report the first measurement report to the network device, and the content of the first measurement report includes the first number of cells with best measurement results in the first cellsTriggeredList and the measurement result corresponding to each of the first number of cells.

It should be noted that the above embodiments are not exhaustive, but are only examples of some embodiments, and the above embodiments may be implemented individually or in combination, which is not specifically limited by embodiments of the present invention.

It should be noted that in embodiments of the present invention, S51 to S54 may be performed alone or in combination with any other step in embodiments of the present invention, for example, in combination with S31 and S32 and/or S41 and S43 in embodiments of the present invention, which will not be specifically limited in embodiments of the present invention.

By implementing embodiments of the present invention, the terminal receives the configuration information sent by the network device, determines the content of the first measurement report of the height-based triggered measurement reporting according to the configuration information, adds the applicable cell to the first cellsTriggeredList, in response to the height-based measurement reporting event being satisfied; where the applicable cell is a non-serving cell detectable by the terminal, and reports the first measurement report to the network device, where the content of the first measurement report includes one or more cells in the first cellsTriggeredList. In this way, the terminal may determine to trigger the reporting of the measurement result of the non-serving cell according to the configuration information, so that the network device may optimize the mobility configuration of the terminal to realize the mobility enhancement.

Referring to FIG. 6, FIG. 6 is a schematic flowchart of yet another method for measurement reporting according to embodiments of the present invention.

As shown in FIG. 6, the method is performed by a terminal, and the method may include but is not limited to the following steps:

In S61, configuration information sent by a network device is received.

In S62, a content of a first measurement report of height-based triggered measurement reporting is determined according to the configuration information.

For the relevant descriptions of S61 and S62, reference may be made to the relevant descriptions in the above embodiments and will not be described again here.

In S63, in response to the height-based measurement reporting event being satisfied, the first measurement report is reported to the network device, the content of the first measurement report includes one or more cell in applicable cells, and the applicable cells are non-serving cells detectable by the terminal.

In embodiments of the present invention, in the case where the height-based measurement reporting event is satisfied, the terminal reports the first measurement report to the network device, and the content of the first measurement report includes one or more cells in the applicable cells.

The height-based measurement reporting event includes one or more of event H1 or event H2.

In embodiments of the present invention, the applicable cell is a non-serving cell detectable by the terminal. For example, the applicable cell is a non-serving cell detectable by the terminal on a corresponding frequency of the configuration information sent by the network device.

In some embodiments, the content of the first measurement report includes a second number of cells with best measurement results in the applicable cells, where the second number is an integer.

In embodiments of the present invention, in the case where the height-based measurement reporting event is satisfied, the terminal reports the first measurement report to the network device, and the content of the first measurement report includes one or more cells in the applicable cells, including the second number of cells with best measurement results in the applicable cells.

For example, the second number is 3. In the case where the height-based measurement reporting event is satisfied, the terminal reports the first measurement report to the network device, and the content of the first measurement report includes 3 cells with best measurement results in the applicable cells.

Of course, the above example is only for illustration, and the second number may be other integer other than 3, and may be set as needed, which is not specifically limited in embodiments of the present invention.

In embodiments of the present invention, the terminal may determine the second number depending on implementation, or according to an indication from the network device, or according to a protocol, etc., which is not specifically limited in embodiments of the present invention.

In some embodiments, if there is an applicable cell to be reported by the terminal, and if the reporting type is set to event-based reporting or periodical reporting, measurement results of neighboring cells are set to include best neighboring cells up to a maximum reporting cell number:

For example, if the reporting type is event-based reporting, but the event is not event H1 and/or event H2 (and/or other height-based measurement reporting events), measurement results of neighboring cells include cells in a cellsTriggeredList corresponding to a respective measurement identifier within the Var variable; otherwise, an applicable cell is included, and the applicable cell may be an applicable cell for which the new measurement result becomes available since last periodical reporting, measurement initiation or measurement reset.

For example, if the reporting type is the event-based reporting, but the event is not event H1 and/or event H2 (and/or other height-based measurement reporting events), measurement results of neighboring cells include cells in a cellsTriggeredList corresponding to a respective measurement identifier within the Var variable;

For example, if the reporting type is not the event-based reporting (such as periodical reporting), or the reporting type is the event-based reporting and the reporting event is event H1 or event H2 (or other height-based measurement reporting events), an applicable cell is included, and the applicable cell may be an applicable cell for which the new measurement result becomes available since last periodical reporting, measurement initiation or measurement reset.

For example, 1> if there is at least one applicable neighboring cell to report:

2> if the reportType is set to eventTriggered or periodical:

3> set the measResultNeighCells to include the best neighboring cells up to maxReportCells in accordance with the following:

4> if the reportType is set to eventTriggered and eventId is not set to eventH1 and/or eventH2:

5> include the cells included in the cellsTriggeredList as defined within the VarMeasReportList for this measId;

4>else

5> include the applicable cells for which the new measurement results became available since the last periodical reporting or since the measurement was initiated or reset.

In some embodiments, if there is an applicable cell to be reported by the terminal, and if the reporting type is set to event-based reporting or periodical reporting, measurement results of neighboring cells are set to include best neighboring cells up to a maximum reporting cell number:

For example, if the reporting type is set to the event-based reporting, measurement results of neighboring cells include cells in a cellsTriggeredList corresponding to a respective measurement identifier within the Var variable; and/or

if the reporting type is set to the event-based reporting, and the event is event H1 or event H2 (or other height-based measurement reporting events); or the reporting type is set to periodical reporting, an applicable cell is included, where the applicable cell may be an applicable cell for which the new measurement result becomes available since last periodical reporting, measurement initiation or measurement reset.

For example, 1> if there is at least one applicable neighboring cell to report:

2> if the reportType is set to eventTriggered or periodical:

3> set the measResultNeighCells to include the best neighboring cells up to maxReportCells in accordance with the following:

4> if the reportType is set to eventTriggered:

5> include the cells included in the cellsTriggeredList as defined within the VarMeasReportList for this measId;

4> or, if the reportType is set to eventTriggered and eventID is set to eventH1 or eventH2, or if the reportType is set to periodical:

5> include the applicable cells for which the new measurement results became available since the last periodical reporting or since the measurement was initiated or reset.

In some embodiments, the content of the first measurement report also includes a cell identifier and/or a measurement result corresponding to a cell.

In embodiments of the present invention, in the case where the height-based measurement reporting event is satisfied, the terminal reports the first measurement report to the network device, and the content of the first measurement report includes one or more cells in the applicable cells and a cell identifier corresponding to each of the one or more cells.

In embodiments of the present invention, in the case where the height-based measurement reporting event is satisfied, the terminal reports the first measurement report to the network device, and the content of the first measurement report includes one or more cells in the applicable cells and a measurement result corresponding to each of the one or more cells.

In embodiments of the present invention, in the case where the height-based measurement reporting event is satisfied, the terminal reports the first measurement report to the network device, and the content of the first measurement report includes the second number of cells with best measurement results in the applicable cells and a cell identifier corresponding to each of the second number of cells.

In embodiments of the present invention, in the case where the height-based measurement reporting event is satisfied, the terminal reports the first measurement report to the network device, and the content of the first measurement report includes the second number of cells with best measurement results in the applicable cells and a measurement result corresponding to each of the second number of cells.

It should be noted that the above embodiments are not exhaustive, but are only examples of some embodiments, and the above embodiments may be implemented individually or in combination, which will not be specifically limited by embodiments of the present invention.

It should be noted that in embodiments of the present invention, S61 to S63 may be performed alone or in combination with any other step in embodiments of the present invention, for example, in combination with S31 and S32 and/or S41 and S43 in embodiments of the present invention, which will not be specifically limited in embodiments of the present invention.

By implementing embodiments of the present invention, the terminal receives the configuration information sent by the network device, determines the content of the first measurement report of the height-based triggered measurement reporting according to the configuration information, and reports the first measurement report to the network device in response to the height-based measurement reporting event being satisfied, where the content of the first measurement report includes one or more cell in applicable cells, and the applicable cells are non-serving cells detectable by the terminal. In this way, the terminal may determine to trigger the reporting of the measurement result of the non-serving cell according to the configuration information, so that the network device may optimize the mobility configuration of the terminal to realize the mobility enhancement.

Referring to FIG. 7, FIG. 7 is a schematic flowchart of yet another method for measurement reporting according to embodiments of the present invention.

As shown in FIG. 7, the method is performed by a terminal, and the method may include but is not limited to the following steps:

In S71, configuration information sent by a network device is received.

In S72, a content of a first measurement report of height-based triggered measurement reporting is determined according to the configuration information.

For the relevant descriptions of S71 and S72, reference may be made to the relevant descriptions in the above embodiments and will not be described again here.

In S73, in response to an event triggering the measurement reporting not being the height-based measurement reporting event, a second measurement report is reported to the network device, a content of the second measurement report includes one or more cells in a second cellsTriggeredList, and the second cellsTriggeredList is determined in a case where the measurement reporting is triggered by the event which is not the height-based measurement reporting event.

In embodiments of the present invention, in the case where the event triggering the measurement reporting is not the height-based measurement reporting event, the terminal reports the second measurement report to the network device, the content of the second measurement report includes one or more cells in the second cellsTriggeredList, and the second cellsTriggeredList is determined in the case where the measurement reporting is triggered by the event which is not the height-based measurement reporting event.

For example, when the event triggering the measurement reporting is event A1, the terminal reports the second measurement report to the network device, the content of the second measurement report includes one or more cells in the second cellsTriggeredList, and the second cellsTriggeredList is determined in the case where the measurement reporting is triggered by the event A1 which is not the height-based measurement reporting event. For example, in the case where the event A1 is satisfied, the terminal triggers and generates the second cellsTriggeredList, thereby determining the second cellsTriggeredList.

In some embodiments, the content of the second measurement report also includes a cell identifier and/or a measurement result corresponding to a cell.

In embodiments of the present invention, in the case where the event triggering the measurement reporting is not the height-based measurement reporting event, the second measurement report is reported to the network device, and the content of the second measurement report includes one or more cells in the second cellsTriggeredList and the cell identifier corresponding to each of the one or more cells.

In embodiments of the present invention, in the case where the event triggering the measurement reporting is not the height-based measurement reporting event, the second measurement report is reported to the network device, and the content of the second measurement report includes one or more cells in the second cellsTriggeredList and the measurement result corresponding to each of the one or more cells.

It should be noted that the above embodiments are not exhaustive, but are only examples of some embodiments, and the above embodiments may be implemented individually or in combination, which will not be specifically limited by embodiments of the present invention.

It should be noted that in embodiments of the present invention, S71 to S73 may be performed alone or in combination with any other step in embodiments of the present invention, for example, in combination with S31 and S32 and/or S41 and S43 and/or S51 and S54 and/or S61 and S63 in embodiments of the present invention, which will not be specifically limited in embodiments of the present invention.

By implementing embodiments of the present invention, the terminal receives the configuration information sent by the network device, determines the content of the first measurement report of the height-based triggered measurement reporting according to the configuration information, and reports the second measurement report to the network device, in response to the event triggering the measurement reporting not being the height-based measurement reporting event, where the content of the second measurement report includes one or more cells in the second cellsTriggeredList, and the second cellsTriggeredList is determined in the case where the measurement reporting is triggered by the event which is not the height-based measurement reporting event. In this way, the terminal may determine to trigger the reporting of the measurement result of the non-serving cell according to the configuration information, so that the network device may optimize the mobility configuration of the terminal to realize the mobility enhancement.

Referring to FIG. 8, FIG. 8 is a schematic flowchart of yet another method for measurement reporting according to embodiments of the present invention.

As shown in FIG. 8, the method is performed by a terminal, and the method may include but is not limited to the following steps:

In S81, configuration information sent by a network device is received, and the configuration information includes information for indicating whether to report a measurement result of a non-serving cell.

In embodiments of the present invention, the terminal receives the configuration information sent by the network device; the configuration information includes the information for indicating whether to report a measurement result of a non-serving cell, and the terminal may determine the content of the first measurement report of the height-based triggered measurement reporting according to the configuration information.

In a case where the configuration information includes the information for indicating whether to report a measurement result of a non-serving cell, and the information for indicating whether to report a measurement result of a non-serving cell indicates to report a measurement result of a non-serving cell, the terminal may determine according to the configuration information that the content of the first measurement report of the height-based triggered measurement reporting includes a measurement result of a non-serving cell.

In S82, in response to the configuration information including the information for indicating whether to report a measurement result of a non-serving cell, and the information for indicating whether to report a measurement result of a non-serving cell indicating to report a measurement result of a non-serving cell, the content of the first measurement report of the height-based triggered measurement reporting is determined according to the configuration information, and the content of the first measurement report includes a measurement result of a non-serving cell.

In embodiments of the present invention, in the case where the configuration information includes the information for indicating whether to report a measurement result of a non-serving cell, and the information for indicating whether to report a measurement result of a non-serving cell indicates to report a measurement result of a non-serving cell, the terminal determines the content of the first measurement report of the height-based triggered measurement reporting according to the configuration information, where the content of the first measurement report includes a measurement result of a non-serving cell.

Based on this, the terminal may report the first measurement report to the network device in the case where the height-based measurement reporting event is satisfied, and the content of the first measurement report includes the measurement result of the non-serving cell.

It should be noted that in embodiments of the present invention, S81 to S82 may be performed alone or in combination with any other step in embodiments of the present invention, for example, in combination with S31 and S32 in embodiments of the present invention, which will not be specifically limited in embodiments of the present invention.

By implementing embodiments of the present invention, the terminal receives the configuration information sent by the network device, where the configuration information includes the information for indicating whether to report a measurement result of a non-serving cell, and determines the content of the first measurement report of the height-based triggered measurement reporting according to the configuration information, in response to the configuration information including the information for indicating whether to report a measurement result of a non-serving cell, and the information for indicating whether to report a measurement result of a non-serving cell indicating to report a measurement result of a non-serving cell, where the content of the first measurement report includes the measurement result of the non-serving cell. In this way, the terminal may determine to trigger the reporting of the measurement result of the non-serving cell according to the configuration information, so that the network device may optimize the mobility configuration of the terminal to realize the mobility enhancement.

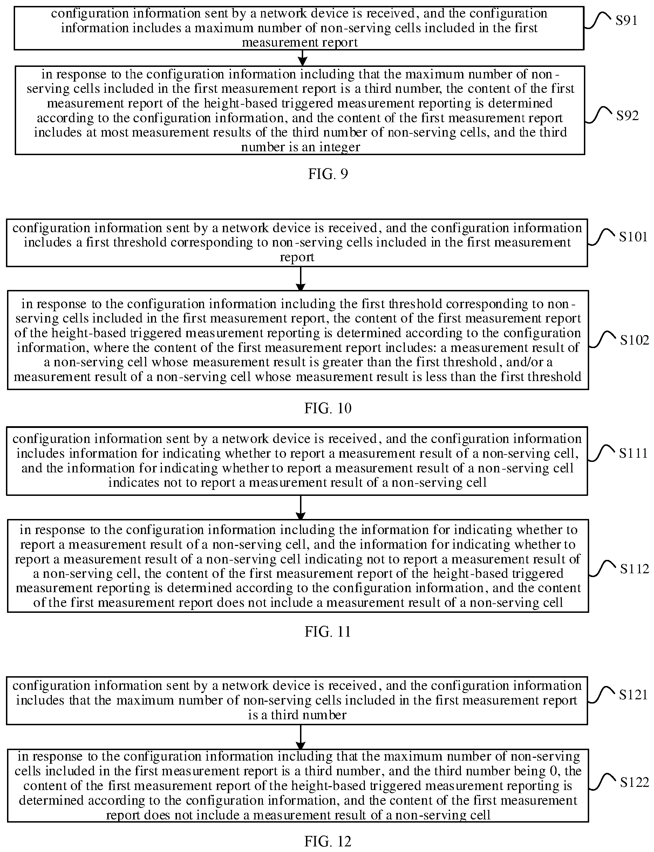

Referring to FIG. 9, FIG. 9 is a schematic flowchart of yet another method for measurement reporting according to embodiments of the present invention.

As shown in FIG. 9, the method is performed by a terminal, and the method may include but is not limited to the following steps:

In S91, configuration information sent by a network device is received, and the configuration information includes a maximum number of non-serving cells included in the first measurement report.

In embodiments of the present invention, the terminal receives the configuration information sent by the network device, the configuration information includes an indication of the maximum number of non-serving cells included in the first measurement report, and the terminal may determine according to the configuration information that the content of the first measurement report of the height-based triggered measurement reporting includes the non-serving cells up to the maximum number.

In S92, in response to the configuration information including that the maximum number of non-serving cells included in the first measurement report is a third number, the content of the first measurement report of the height-based triggered measurement reporting is determined according to the configuration information, and the content of the first measurement report includes at most measurement results of the third number of non-serving cells, and the third number is an integer.

In embodiments of the present invention, in a case where the configuration information includes that the maximum number of non-serving cells included in the first measurement report is the third number, the terminal determines the content of the first measurement report of the height-based triggered measurement reporting according to the configuration information, where the content of the first measurement report includes at most the measurement results of the third number of non-serving cells, and the third number is an integer.

For example, the third number is 2. In a case where the configuration information includes that the maximum number of non-serving cells included in the first measurement report is 2, the terminal determines the content of the first measurement report of the height-based triggered measurement reporting according to the configuration information, where the content of the first measurement report includes measurement results of at most 2 non-serving cells.

Based on this, the terminal may report the first measurement report to the network device in the case where the height-based measurement reporting event is satisfied, and the content of the first measurement report includes at most the measurement results of the third number of non-serving cells.

It should be noted that in embodiments of the present invention, S91 to S92 may be performed alone or in combination with any other step in embodiments of the present invention, for example, in combination with S31 and S32 in embodiments of the present invention, which will not be specifically limited in embodiments of the present invention.

By implementing embodiments of the present invention, the terminal receives the configuration information sent by the network device, and the configuration information includes the maximum number of non-serving cells included in the first measurement report. In response to the configuration information including that the maximum number of non-serving cells included in the first measurement report is the third number, the content of the first measurement report of the height-based triggered measurement reporting is determined according to the configuration information, the content of the first measurement report includes at most measurement results of the third number of non-serving cells, and the third number is an integer. In this way, the terminal may determine to trigger the reporting of the measurement result of the non-serving cell according to the configuration information, so that the network device may optimize the mobility configuration of the terminal to realize the mobility enhancement.

Referring to FIG. 10, FIG. 10 is a schematic flowchart of yet another method for measurement reporting according to embodiments of the present invention.

As shown in FIG. 10, the method is performed by a terminal, and the method may include but is not limited to the following steps:

In S101, configuration information sent by a network device is received, and the configuration information includes a first threshold corresponding to non-serving cells included in the first measurement report. In embodiments of the present invention, the terminal receives the configuration information sent by the network device; the configuration information includes the first threshold corresponding to non-serving cells included in the first measurement report, and the terminal may determine according to the configuration information that the content of the first measurement report of the height-based triggered measurement reporting includes non-serving cells meeting the requirement of the first threshold. In S102, in response to the configuration information including the first threshold corresponding to non-serving cells included in the first measurement report, the content of the first measurement report of the height-based triggered measurement reporting is determined according to the configuration information. The content of the first measurement report includes: a measurement result of a non-serving cell whose measurement result is greater than the first threshold, and/or a measurement result of a non-serving cell whose measurement result is less than the first threshold.

In embodiments of the present invention, in a case where the configuration information includes the first threshold corresponding to non-serving cells included in the first measurement report, the terminal determines the content of the first measurement report of the height-based triggered measurement reporting according to the configuration information, and the content of the first measurement report includes the measurement result of the non-serving cell whose measurement result is greater than the first threshold.

Based on this, in the case where the height-based measurement reporting event is satisfied, the terminal may report the first measurement report to the network device, and the content of the first measurement report includes the measurement result of the non-serving cell whose measurement result is greater than the first threshold.

In embodiments of the present invention, in a case where the configuration information includes the first threshold corresponding to non-serving cells included in the first measurement report, the terminal determines the content of the first measurement report of the height-based triggered measurement reporting according to the configuration information, and the content of the first measurement report includes the measurement result of the non-serving cell whose measurement result is less than the first threshold.

Based on this, in the case where the height-based measurement reporting event is satisfied, the terminal may report the first measurement report to the network device, and the content of the first measurement report includes the measurement result of the non-serving cell whose measurement result is less than the first threshold.

The non-serving cell may be an applicable cell, which is a neighboring cell detectable by the terminal. For example, the applicable cell is a neighboring cell that can be detected by the terminal on a frequency corresponding to the configuration information sent by the network device.

The terminal may also add the non-serving cell whose measurement result is less than the first threshold to a cellsTriggeredList.

It should be noted that the above embodiments are not exhaustive, but are only examples of some embodiments, and the above embodiments may be implemented individually or in combination, which will not be specifically limited by embodiments of the present invention.

It should be noted that in embodiments of the present invention, S101 to S102 may be performed alone or in combination with any other step in embodiments of the present invention, for example, in combination with S31 and S32 in embodiments of the present invention, which will not be specifically limited in embodiments of the present invention.

By implementing embodiments of the present invention, the terminal receives the configuration information sent by the network device, and the configuration information includes the first threshold corresponding to non-serving cells included in the first measurement report. In response to the configuration information including the first threshold corresponding to non-serving cells included in the first measurement report, the content of the first measurement report of the height-based triggered measurement reporting is determined according to the configuration information, and the content of the first measurement report includes the measurement result of the non-serving cell whose measurement result is greater than the first threshold, and/or the measurement result of the non-serving cell whose measurement result is less than the first threshold. In this way, the terminal may determine to trigger the reporting of the measurement result of the non-serving cell according to the configuration information, so that the network device may optimize the mobility configuration of the terminal to realize the mobility enhancement.

Referring to FIG. 11, FIG. 11 is a schematic flowchart of yet another method for measurement reporting according to embodiments of the present invention.

As shown in FIG. 11, the method is performed by a terminal, and the method may include but is not limited to the following steps:

In S111, configuration information sent by a network device is received, and the configuration information includes information for indicating whether to report a measurement result of a non-serving cell, and the information for indicating whether to report a measurement result of a non-serving cell indicates not to report a measurement result of a non-serving cell.

In embodiments of the present invention, the terminal receives the configuration information sent by the network device; the configuration information includes the information for indicating whether to report a measurement result of a non-serving cell, and the terminal may determine the content of the first measurement report of the height-based triggered measurement reporting according to the configuration information.

In the case where the configuration information includes the information for indicating whether to report a measurement result of a non-serving cell, and the information for indicating whether to report a measurement result of a non-serving cell indicates not to report a measurement result of a non-serving cell, the terminal may determine according to the configuration information that the content of the first measurement report of the height-based triggered measurement reporting does not include a measurement result of a non-serving cell.

In S112, in response to the configuration information including the information for indicating whether to report a measurement result of a non-serving cell, and the information for indicating whether to report a measurement result of a non-serving cell indicating not to report a measurement result of a non-serving cell, the content of the first measurement report of the height-based triggered measurement reporting is determined according to the configuration information, and the content of the first measurement report does not include a measurement result of a non-serving cell.

In embodiments of the present invention, in the case where the configuration information includes the information for indicating whether to report a measurement result of a non-serving cell, and the information for indicating whether to report a measurement result of a non-serving cell indicates not to report a measurement result of a non-serving cell, the terminal determines the content of the first measurement report of the height-based triggered measurement reporting according to the configuration information, and the content of the first measurement report does not include a measurement result of a non-serving cell.

Based on this, in the case where the height-based measurement reporting event is satisfied, the terminal may report the first measurement report to the network device, and the content of the first measurement report does not include a measurement result of a non-serving cell.

It should be noted that in embodiments of the present invention, S111 to S112 may be performed alone or in combination with any other step in embodiments of the present invention, for example, in combination with S31 and S32 and/or S81 and S82 in embodiments of the present invention, which will not be specifically limited in embodiments of the present invention.

By implementing embodiments of the present invention, the terminal receives the configuration information sent by the network device, the configuration information includes the information for indicating whether to report a measurement result of a non-serving cell, and the information for indicating whether to report a measurement result of a non-serving cell indicates not to report a measurement result of a non-serving cell. In response to the configuration information including the information for indicating whether to report a measurement result of a non-serving cell, and the information for indicating whether to report a measurement result of a non-serving cell indicating not to report a measurement result of a non-serving cell, the content of the first measurement report of the height-based triggered measurement reporting is determined according to the configuration information, and the content of the first measurement report does not include a measurement result of a non-serving cell. In this way, the terminal may determine not to trigger the reporting of the measurement result of the non-serving cell according to the configuration information.

Referring to FIG. 12, FIG. 12 is a schematic flowchart of yet another method for measurement reporting according to embodiments of the present invention.

As shown in FIG. 12, the method is performed by a terminal, and the method may include but is not limited to the following steps:

> In S121, configuration information sent by a network device is received, and the configuration information includes that the maximum number of non-serving cells included in the first measurement report is a third number.
>
> In embodiments of the present invention, the terminal receives the configuration information sent by the network device; the configuration information includes an indication of the maximum number of non-serving cells included in the first measurement report, and the terminal may determine according to the configuration information that the content of the first measurement report of the height-based triggered measurement reporting includes non-serving cells up to the maximum number.
>
> In S122, in response to the configuration information including that the maximum number of non-serving cells included in the first measurement report is a third number, and the third number being 0, the content of the first measurement report of the height-based triggered measurement reporting is determined according to the configuration information, and the content of the first measurement report does not include a measurement result of a non-serving cell.

In embodiments of the present invention, in the case where the configuration information includes that the maximum number of non-serving cells included in the first measurement report is the third number, and the third number is 0, the terminal determines the content of the first measurement report of the height-based triggered measurement reporting according to the configuration information, and the content of the first measurement report does not include a measurement result of a non-serving cell.

Based on this, in the case where the height-based measurement reporting event is satisfied, the terminal may report the first measurement report to the network device, and the content of the first measurement report does not include a measurement result of a non-serving cell.

It should be noted that in embodiments of the present invention, S121 to S122 may be performed alone or in combination with any other step in embodiments of the present invention, for example, in combination with S31 and S32 and/or S91 and S92 in embodiments of the present invention, which will not be specifically limited in embodiments of the present invention.

By implementing embodiments of the present invention, the terminal receives the configuration information sent by the network device, the configuration information includes the information for indicating whether to report a measurement result of a non-serving cell, and the information for indicating whether to report a measurement result of a non-serving cell indicates not to report a measurement result of a non-serving cell. In response to the configuration information including the information for indicating whether to report a measurement result of a non-serving cell, and the information for indicating whether to report a measurement result of a non-serving cell indicating not to report a measurement result of a non-serving cell, the content of the first measurement report of the height-based triggered measurement reporting is determined according to the configuration information, and the content of the first measurement report does not include a measurement result of a non-serving cell. In this way, the terminal may determine not to trigger the reporting of the measurement result of the non-serving cell according to the configuration information.

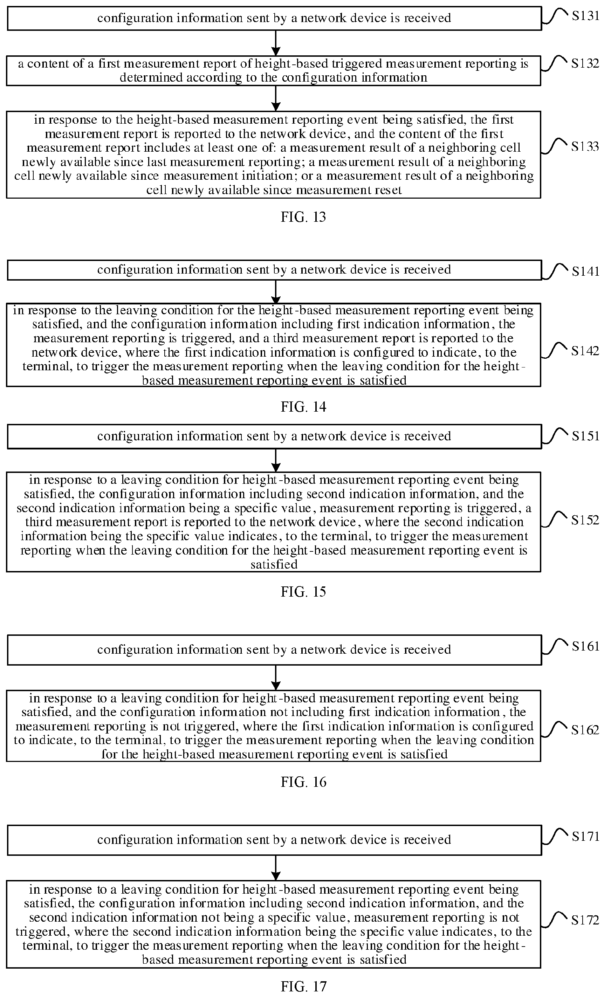

Referring to FIG. 13, FIG. 13 is a schematic flowchart of yet another method for measurement reporting according to embodiments of the present invention.

As shown in FIG. 13, the method is performed by a terminal, and the method may include but is not limited to the following steps:

> In S131, configuration information sent by a network device is received.
>
> In S132, a content of a first measurement report of height-based triggered measurement reporting is determined according to the configuration information.
>
> For the relevant descriptions of S131 and S132, reference may be made to the relevant descriptions in the above embodiments and will not be described again here.
>
> In S133, in response to the height-based measurement reporting event being satisfied, the first measurement report is reported to the network device, and the content of the first measurement report includes at least one of: a measurement result of a neighboring cell newly available since last measurement reporting; a measurement result of a neighboring cell newly available since measurement initiation; or a measurement result of a neighboring cell newly available since measurement reset.

In embodiments of the present invention, the terminal determines the content of the first measurement report of the height-based triggered measurement reporting according to the configuration information, where the content of the first measurement report includes the measurement result of the non-serving cell, and the content of the first measurement report includes the measurement result of the neighboring cell newly available since the last measurement reporting.

In embodiments of the present invention, the terminal determines the content of the first measurement report of the height-based triggered measurement reporting according to the configuration information, where the content of the first measurement report includes the measurement result of the non-serving cell, and the content of the first measurement report includes the measurement result of the neighboring cell newly available since the measurement initiation.

In embodiments of the present invention, the terminal determines the content of the first measurement report of the height-based triggered measurement reporting according to the configuration information, where the content of the first measurement report includes the measurement result of the non-serving cell, and the content of the first measurement report includes the measurement result of the neighboring cell newly available since the measurement reset.

It should be noted that the above embodiments are not exhaustive, but are only examples of some embodiments, and the above embodiments may be implemented individually or in combination, which will not be specifically limited by embodiments of the present invention.

It should be noted that in embodiments of the present invention, S131 to S133 may be performed alone or in combination with any other step in embodiments of the present invention, for example, in combination with S31 and S32 and/or S41 and S43 and/or S51 and S54 and/or S61 and S63 and/or S71 and S73 and/or S81 to S82 and/or S91 to S92 and/or S101 to S102 in embodiments of the present invention, which will not be specifically limited in embodiments of the present invention.

By implementing embodiments of the present invention, the terminal receives the configuration information sent by the network device, and the content of the first measurement report of the height-based triggered measurement reporting is determined according to the configuration information. In response to the height-based measurement reporting event being satisfied, the first measurement report is reported to the network device, and the content of the first measurement report includes at least one of: the measurement result of the neighboring cell newly available since the last measurement reporting; the measurement result of the neighboring cell newly available since the measurement initiation; or the measurement result of the neighboring cell newly available since the measurement reset. In this way, the terminal may determine to trigger the reporting of the measurement result of the non-serving cell according to the configuration information, so that the network device may optimize the mobility configuration of the terminal to realize the mobility enhancement.

Referring to FIG. 14, FIG. 14 is a schematic flowchart of yet another method for measurement reporting according to embodiments of the present invention.

As shown in FIG. 14, the method is performed by a terminal, and the method may include but is not limited to the following steps:

In S141, configuration information sent by a network device is received.

In embodiments of the present invention, the terminal receives the configuration information sent by the network device, and the configuration information includes information for indicating, to the terminal, whether to trigger the measurement reporting when a leaving condition for the height-based measurement reporting event is satisfied.

It may be understood that the terminal receives the configuration information sent by the network device, and the configuration information includes the information for indicating, to the terminal, whether to trigger the measurement reporting when the leaving condition for the height-based measurement reporting event is satisfied. The terminal may determine, according to the configuration information, whether to trigger the measurement reporting and whether need to report the measurement report to the network device in the case where the leaving condition for the height-based report triggering event is satisfied.

For example, the configuration information includes the information for indicating, to the terminal, whether to trigger the measurement reporting when the leaving condition for the height-based measurement reporting event is satisfied. The configuration information may include first indication information for indicating, to the terminal, to trigger the measurement reporting when the leaving condition for the height-based measurement reporting event is satisfied.

In this case, based on the configuration information, the terminal may determine to trigger the measurement reporting and determine to report the measurement report to the network device, in the case where the leaving condition for the height-based report triggering event is satisfied.

For example, the configuration information includes the information for indicating, to the terminal, whether to trigger the measurement reporting when the leaving condition for the height-based measurement reporting event is satisfied. The configuration information may include second indication information for indicating, to the terminal, not to trigger the measurement reporting when the leaving condition for the height-based measurement reporting event is satisfied.

In this case, based on the configuration information, the terminal may determine not to trigger the measurement reporting and determine not to report the measurement report to the network device, in the case where the leaving condition for the height-based report triggering event is satisfied.

In embodiments of the present invention, the terminal receives the configuration information sent by the network device, and the configuration information does not include the indication information for indicating, to the terminal, whether to trigger the measurement reporting when the leaving condition for the height-based measurement reporting event is satisfied.

It may be understood that the terminal receives the configuration information sent by the network device, in the case where the configuration information does not include the indication information for indicating, to the terminal, whether to trigger the measurement reporting when the leaving condition for the height-based measurement reporting event is satisfied, the terminal may determine not to trigger the measurement reporting and determine there is no need to report the measurement report to the network device, in the case where the leaving condition for the height-based report triggering event is satisfied.

In S142, in response to the leaving condition for the height-based measurement reporting event being satisfied, and the configuration information including first indication information, the measurement reporting is triggered, and a third measurement report is reported to the network device, where the first indication information is configured to indicate, to the terminal, to trigger the measurement reporting when the leaving condition for the height-based measurement reporting event is satisfied.

The first indication information may be ReportOnLeave.

In embodiments of the present invention, in the case where the leaving condition for the height-based measurement reporting event is satisfied, and the configuration information includes the first indication information, the terminal triggers the measurement reporting and reports the third measurement report to the network device. The first indication information is configured to indicate, to the terminal, to trigger the measurement reporting when the leaving condition for the height-based measurement reporting event is satisfied.

For example, the first indication information may be a signaling or a message sent by the network device to the terminal in the related art, which is not specifically limited in embodiments of the present invention.

It should be noted that in embodiments of the present invention, S141 to S142 may be performed alone or in combination with any other step in embodiments of the present invention, for example, in combination with S31 to S32 in embodiments of the present invention, which will not be specifically limited in embodiments of the present invention.

By implementing embodiments of the present invention, the terminal receives the configuration information sent by the network device. In response to the leaving condition for the height-based measurement reporting event being satisfied, and the configuration information including the first indication information, the measurement reporting is triggered, and the third measurement report is reported to the network device, where the first indication information is configured to indicate, to the terminal, to trigger the measurement reporting when the leaving condition for the height-based measurement reporting event is satisfied. In this way, the terminal may determine, according to the configuration information, to trigger the reporting of the third measurement report in the case where the leaving condition for the height-based measurement reporting event is satisfied, so that the network device may optimize the mobility configuration of the terminal or perform the corresponding interference elimination to realize the mobility enhancement.

Referring to FIG. 15, FIG. 15 is a schematic flowchart of yet another method for measurement reporting according to embodiments of the present invention.

As shown in FIG. 15, the method is performed by a terminal, and the method may include but is not limited to the following steps:

In S151, configuration information sent by a network device is received.

For the relevant descriptions of S151, reference may be made to the relevant descriptions of S141 in the above embodiments and will not be described again here.

In S152, in response to a leaving condition for height-based measurement reporting event being satisfied, the configuration information including second indication information, and the second indication information being a specific value, measurement reporting is triggered, a third measurement report is reported to the network device. The second indication information being the specific value indicates, to the terminal, to trigger the measurement reporting when the leaving condition for the height-based measurement reporting event is satisfied.

The second indication information may be ReportOnLeave.

In embodiments of the present invention, in the case where the leaving condition for the height-based measurement reporting event is satisfied, the configuration information includes the second indication information, and the second indication information is the specific value, the terminal triggers the measurement reporting and reports the third measurement report to the network device. The second indication information being the specific value indicates, to the terminal, to trigger the measurement reporting when the leaving condition for the height-based measurement reporting event is satisfied.

For example, the second indication information may be 1 bit. When the second indication information is a specific value of 1, the terminal may determine to trigger the measurement reporting and report the third measurement report to the network device.

For example, when the second indication information is a specific value (for example, true), the terminal may determine to trigger the measurement reporting and report the third measurement report to the network device.

It should be noted that in embodiments of the present invention, S151 to S152 may be performed alone or in combination with any other step in embodiments of the present invention, for example, in combination with S31 and S32 in embodiments of the present invention, which will not be specifically limited in embodiments of the present invention.

By implementing embodiments of the present invention, the terminal receives the configuration information sent by the network device, and triggers the measurement reporting to report the third measurement report to the network device, in response to the leaving condition for the height-based measurement reporting event being satisfied, the configuration information including second indication information, and the second indication information being the specific value, where the second indication information being the specific value indicates, to the terminal, to trigger the measurement reporting when the leaving condition for the height-based measurement reporting event is satisfied. In this way, the terminal may determine, according to the configuration information, to trigger the reporting of the third measurement report in the case where the leaving condition for the height-based measurement reporting event is satisfied, so that the network device may optimize the mobility configuration of the terminal or perform the corresponding interference elimination to realize the mobility enhancement.

Referring to FIG. 16, FIG. 16 is a schematic flowchart of yet another method for measurement reporting according to embodiments of the present invention.

As shown in FIG. 16, the method is performed by a terminal, and the method may include but is not limited to the following steps:

In S161, configuration information sent by a network device is received.

For the relevant descriptions of S161, reference may be made to the relevant descriptions of S141 in the above embodiments and will not be described again here.

In S162, in response to a leaving condition for height-based measurement reporting event being satisfied, and the configuration information not including first indication information, the measurement reporting is not triggered. The first indication information is configured to indicate, to the terminal, to trigger the measurement reporting when the leaving condition for the height-based measurement reporting event is satisfied.

The first indication information may be ReportOnLeave.

In embodiments of the present invention, in the case where the leaving condition for the height-based measurement reporting event is satisfied, and the configuration information does not include the first indication information, the terminal does not trigger the measurement reporting. The first indication information is configured to indicate, to the terminal, to trigger the measurement reporting when the leaving condition for the height-based measurement reporting event is satisfied.

For example, the first indication information may be a signaling or a message sent by the network device to the terminal in the related art, which is not specifically limited in embodiments of the present invention.

It should be noted that in embodiments of the present invention, S161 to S162 may be performed alone or in combination with any other step in embodiments of the present invention, for example, in combination with S31 to S32 and/or S141 to S142 in embodiments of the present invention, which will not be specifically limited in embodiments of the present invention.

By implementing embodiments of the present invention, the terminal receives the configuration information sent by the network device. In response to the leaving condition for the height-based measurement reporting event being satisfied, and the configuration information not including the first indication information, the measurement reporting is not triggered, where the first indication information is configured to indicate, to the terminal, to trigger the measurement reporting when the leaving condition for the height-based measurement reporting event is satisfied. In this way, the terminal may determine, according to the configuration information, not to trigger the measurement reporting in the case where the leaving condition for the height-based measurement reporting event is satisfied.

Referring to FIG. 17, FIG. 17 is a schematic flowchart of yet another method for measurement reporting according to embodiments of the present invention.

As shown in FIG. 17, the method is performed by a terminal, and the method may include but is not limited to the following steps:

In S171, configuration information sent by a network device is received.

For the relevant descriptions of S171, reference may be made to the relevant descriptions of S141 in the above embodiments and will not be described again here.

In S172, in response to a leaving condition for height-based measurement reporting event being satisfied, the configuration information including second indication information, and the second indication information not being a specific value, measurement reporting is not triggered. The second indication information being the specific value indicates, to the terminal, to trigger the measurement reporting when the leaving condition for the height-based measurement reporting event is satisfied.

In embodiments of the present invention, in the case where the leaving condition for the height-based measurement reporting event is satisfied, the configuration information includes the second indication information, and the second indication information is not the specific value, the terminal does not trigger the measurement reporting. The second indication information being the specific value indicates, to the terminal, to trigger the measurement reporting when the leaving condition for the height-based measurement reporting event is satisfied.

The second indication information may be ReportOnLeave.

For example, the second indication information may be 1 bit. When the second indication information is not a specific value of 1, the terminal may determine not to trigger the measurement reporting.

For example, when the second indication information is not a specific value (for example, true), the terminal may determine not to trigger the measurement reporting.

It should be noted that in embodiments of the present invention, S171 to S172 may be performed alone or in combination with any other step in embodiments of the present invention, for example, in combination with S31 and S32 and/or S151 to S152 in embodiments of the present invention, which will not be specifically limited in embodiments of the present invention.

By implementing embodiments of the present invention, the terminal receives the configuration information sent by the network device, and does not trigger the measurement reporting, in response to the leaving condition for the height-based measurement reporting event being satisfied, the configuration information including the second indication information, and the second indication information not being the specific value, where the second indication information being the specific value indicates, to the terminal, to trigger the measurement reporting when the leaving condition for the height-based measurement reporting event is satisfied. In this way, the terminal may determine, according to the configuration information, not to trigger the measurement reporting in the case where the leaving condition for the height-based measurement reporting event is satisfied.

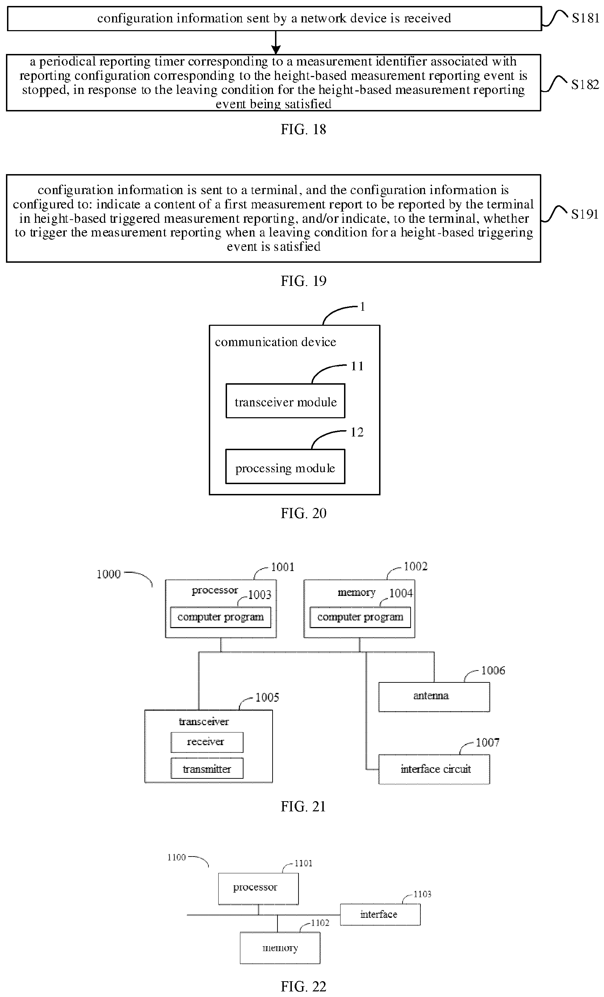

Referring to FIG. 18, FIG. 18 is a schematic flowchart of yet another method for measurement reporting according to embodiments of the present invention.

As shown in FIG. 18, the method is performed by a terminal, and the method may include but is not limited to the following steps:

In S181, configuration information sent by a network device is received.

For the relevant descriptions of S181, reference may be made to the relevant descriptions of S141 in the above embodiments and will not be described again here.

In S182, a periodical reporting timer corresponding to a measurement identifier associated with reporting configuration corresponding to the height-based measurement reporting event is stopped, in response to the leaving condition for the height-based measurement reporting event being satisfied.

In embodiments of the present invention, in the case where the leaving condition for the height-based measurement reporting event is satisfied, the terminal stops the periodical reporting timer corresponding to the measurement identifier associated with the reporting configuration corresponding to the height-based measurement reporting event.

It may be understood that when the leaving condition for the height-based measurement reporting event is satisfied, it means that the height of the terminal does not meet the requirement of the threshold at this time, stopping the periodical reporting timer corresponding to the measurement identifier associated with the reporting configuration corresponding to the height-based measurement reporting event at this time may avoid triggering of the measurement reporting when the periodical reporting timer expires, which may improve the reliability of mobility management.

In some embodiments, for each measurement Id stored by the terminal, if the corresponding reporting type is set to eventTriggered, and the event is the height-based measurement reporting event, and if a leaving condition applicable to this event is satisfied during a corresponding trigger time, one or more of the following steps is performed:

initiating the measurement reporting procedure if the first indication information is configured in the corresponding reporting configuration or the value of the second indication information is the specific value; deleting the measurement reporting entry corresponding to this measurement Id in the measurement reporting list; or stopping the periodical reporting timer for this measurement Id (if it is running).

For example,

1> for each measId included in the measIdList within VarMeasConfig:

2> if the reportType is set to eventTriggered and if the eventId is set to eventH1 or eventH2 and if the leaving condition applicable for this event, i.e. the event corresponding with the eventID of the corresponding reportConfig within VarMeasConfig, is fulfilled during timeToTrigger defined within the VarMeasConfig for this event:

3> if ReportOnLeave is set to true for the corresponding reporting configuration:

    4> initiate the measurement reporting procedure;

3> remove the measurement reporting entry within the VarMeasReportList for this measId;
3> stop the periodical reporting timer for this measId, if running.

Referring to FIG. 19, FIG. 19 is a schematic flowchart of yet another method for measurement reporting according to embodiments of the present invention.
As shown in FIG. 19, the method is performed by a network device, and the method may include but is not limited to the following steps:
In S191, configuration information is sent to a terminal. The configuration information is configured to: indicate a content of a first measurement report to be reported by the terminal in height-based triggered measurement reporting, and/or indicate, to the terminal, whether to trigger the measurement reporting when a leaving condition for a height-based triggering event is satisfied.
In embodiments of the present invention, the network device sends the configuration information to the terminal, and the configuration information is configured to indicate the content of the first measurement report to be reported by the terminal in the height-based triggered measurement reporting. Therefore, the terminal may determine the content of the first measurement report (measResults) of the height-based triggered measurement reporting according to the configuration information.
The configuration information may indicate the content of the first measurement report to be reported in the height-based triggered measurement reporting, and the terminal may determine, according to the configuration information, the content of the first measurement report that needs to be reported when performing the height-based triggered measurement reporting.
In embodiments of the present invention, the terminal receives the configuration information sent by the network device, and determines the content of the first measurement report of the height-based triggered measurement reporting according to the configuration information. Therefore, in a case where the height-based measurement reporting event is satisfied, the terminal may report the determined content of the first measurement report to the network device, so that the network device may optimize mobility configuration of the terminal according to the content of the first measurement report reported by the terminal, to realize the mobility enhancement.
It may be understood that for the height-based triggered measurement reporting, the related art does not support the terminal to trigger the reporting when the leaving condition is satisfied, and when the number of reporting times is reached, even if the terminal satisfies the height-based measurement reporting event, the terminal does not perform reporting any more. Therefore, the network device cannot know in time that the height of the terminal no longer meets the requirement of a threshold.
Since the NR UAV has higher requirements for mobility and reliability, the impact of the above problems is more pronounced in the NR UAV.
For this, in embodiments of the present invention, the network device sends the configuration information to the terminal, and the configuration information is configured to indicate, to the terminal, whether to trigger the measurement reporting when the leaving condition for the height-based triggering event being satisfied. Therefore, the terminal may determine, according to the configuration information, whether to trigger the measurement reporting when the leaving condition for the height-based measurement reporting event is satisfied.
For example, the configuration information may be configured to indicate, to the terminal, to trigger the measurement reporting in the case where the leaving condition for the height-based measurement reporting event is satisfied, or the configuration information may also be configured to indicate, to the terminal, not to trigger the measurement reporting in the case where the leaving condition for the height-based measurement reporting event is satisfied.
Of course, the configuration information may also be configured to indicate other relevant information that enables the terminal to determine whether to trigger the measurement reporting in the case where the leaving condition for the height-based measurement reporting event is satisfied. The configuration information is configured to indicate other relevant information to indirectly indicate, to the terminal, whether to trigger the measurement reporting in the case where the leaving condition for the height-based measurement reporting event is satisfied, which is not specifically limited in embodiments of the present invention.
In embodiments of the present invention, in the case where the leaving condition for the height-based measurement reporting event is satisfied, the terminal may determine whether to trigger the measurement reporting according to the configuration information. In the case where the terminal determines to trigger the measurement reporting according to the configuration information, the network device may obtain the height of the terminal when the leaving condition for the height-based measurement reporting event is satisfied, and promptly learns that the height of the terminal no longer meets the requirement of the threshold, so that the network device may optimize the mobility configuration of the terminal, or perform corresponding interference elimination to realize the mobility enhancement.
By implementing embodiments of the present invention, the network device sends the configuration information to the terminal, and the configuration information is configured to: indicate the content of the first measurement report to be reported by the terminal in the height-based triggered measurement reporting, and/or indicate, to the terminal, whether to trigger the measurement reporting when the leaving condition for the height-based triggering event is satisfied. In this way, the terminal may determine to trigger the reporting according to the configuration information, so that the network device may optimize the mobility configuration of the terminal to realize the mobility enhancement.

In some embodiments, the network device receives the first measurement report reported by the terminal in the case where the height-based measurement reporting event is satisfied, and the content of the first measurement report includes a measurement result of a non-serving cell.

In some embodiments, the network device receives the first measurement report reported by the terminal in the case where the height-based measurement reporting event is satisfied, the content of the first measurement report includes one or more cells in applicable cells added to a first cellsTriggeredList in the case where the height-based measurement reporting event is satisfied, and the applicable cells are non-serving cells dateable by the terminal.

In some embodiments, the content of the first measurement report includes a first number of cells with best measurement results in the first cellsTriggeredList, where the first number is an integer.

In some embodiments, the network device receives the first measurement report reported by the terminal in the case where the height-based measurement reporting event is satisfied, the content of the first measurement report includes one or more cells in applicable cells, and the applicable cells are non-serving cells detectable by the terminal.

In some embodiments, the content of the first measurement report includes a second number of cells with best measurement results in the applicable cells, where the second number is an integer.

In some embodiments, the network device receives a second measurement report reported by the terminal in a case where an event that triggers the measurement reporting and that is not a height-based measurement reporting event is satisfied, a content of the second measurement report includes one or more cells in a second cellsTriggeredList, and the second cellsTriggeredList is determined in a case where the measurement reporting is triggered by the event which is not the height-based measurement reporting event.

In some embodiments, the content of the first measurement report and/or the content of the second measurement report further include(s) a cell identifier and/or a measurement result corresponding to a cell.

In some embodiments, the configuration information includes at least one of:

information for indicating whether to report a measurement result of a non-serving cell;
a maximum number of non-serving cells included in the first measurement report;
a first threshold corresponding to non-serving cells included in the first measurement report;
configuration for a height-based measurement reporting event; or
configuration for a measurement object.

In some embodiments, the height-based measurement reporting event includes at least one of:

event H1, representing that a height of the terminal is higher than a second threshold; or
event H2, representing that a height of the terminal is lower than a second threshold.

In some embodiments, the content of the first measurement report is determined by the terminal according to the configuration information in a case where the configuration information includes the information for indicating whether to report a measurement result of a non-serving cell, and the information for indicating whether to report a measurement result of a non-serving cell indicates to report a measurement result of a non-serving cell.

In some embodiments, the content of the first measurement report includes at most measurement results of a third number of non-serving cells, where the third number is an integer. The content of the first measurement report is determined by the terminal according to the configuration information in a case where the configuration information includes that the maximum number of non-serving cells included in the first measurement report is the third number.

In some embodiments, the content of the first measurement report includes at least one of: a measurement result of a non-serving cell whose measurement result is greater than the first threshold; or a measurement result of a non-serving cell whose measurement result is less than the first threshold. The content of the first measurement report is determined by the terminal according to the configuration information in a case where the configuration information includes the first threshold corresponding to non-serving cells included in the first measurement report.

In some embodiments, the content of the first measurement report does not include a measurement result of a non-serving cell. The content of the first measurement report is determined by the terminal according to the configuration information in a case where the configuration information includes the information for indicating whether to report a measurement result of a non-serving cell, and the information for indicating whether to report a measurement result of a non-serving cell indicates not to report a measurement result of a non-serving cell; or the content of the first measurement report is determined by the terminal according to the configuration information in a case where the configuration information includes that the maximum number of non-serving cells included in the first measurement report is a third number, and the third number is 0.

In some embodiments, the content of the first measurement report includes at least one of:

a measurement result of a neighboring cell newly available since last measurement reporting;
a measurement result of a neighboring cell newly available since measurement initiation; or
a measurement result of a neighboring cell newly available since measurement reset.

In some embodiments, the configuration information includes information for indicating, to the terminal, whether to trigger the measurement reporting when a leaving condition for a height-based measurement reporting event is satisfied; or the configuration information does not includes information for indicating, to the terminal, whether to trigger the measurement reporting when a leaving condition for a height-based measurement reporting event is satisfied.

In some embodiments, the network device receives a third measurement report reported by the terminal in the measurement reporting triggered in a case where a leaving condition for a height-based measurement reporting event is satisfied and the configuration information includes first indication information, where the first indication information is configured to indicate, to the terminal, to trigger the measurement reporting when the leaving condition for the height-based measurement reporting event is satisfied; or receives a third measurement report reported by the terminal in the measurement reporting triggered in a case where a leaving condition for a height-based measurement reporting event is satisfied, the configuration information includes second indication information, and the second indication information is a specific value, where the second indication information being the specific value indicates, to the terminal, to trigger the measurement reporting when the leaving condition for the height-based measurement reporting event is satisfied.

In embodiments of the present invention, for the relevant descriptions of the method for measurement reporting performed by the network device, reference may be made to the relevant descriptions of the method for measurement reporting performed by the terminal in the above embodiments and will not be described again here.

In the above embodiments provided in the present invention, the methods according to embodiments of the present invention are introduced from the perspectives of terminal and network device respectively. In order to implement various functions in the methods as described in the above embodiments of the present invention, the terminal and the network device may include a hardware structure and a software module to implement the above functions in the form of the hardware structure, the software module, or the hardware structure plus the software module. A certain function among the above functions may be executed by the hardware structure, the software module, or the hardware structure plus the software module.

Referring to FIG. 20, FIG. 20 is a schematic block diagram of a communication device 1 according to embodiments of the present invention. The communication device 1 shown in FIG. 20 may include a transceiver module 11 and a processing module 12. The transceiver module may include a sending module and/or a receiving module, the sending module is configured to implement a sending function, the receiving module is configured to implement the receiving function, and the transceiver module may implement the sending function and/or the receiving function.

The communication device 1 may be a terminal, an apparatus in the terminal, or an apparatus that may be used in conjunction with the terminal. Alternatively, the communication device 1 may be a network device, an apparatus in the network device, or an apparatus that may be used in conjunction with the network device.

The communication device 1 is the terminal:

The communication device includes a transceiver module 11 and a processing module 12.

The transceiver module 11 is configured to receive configuration information sent by a network device.

The processing module 12 is configured to: determine a content of a first measurement report of height-based triggered measurement reporting according to the configuration information; and/or determine whether to trigger the measurement reporting according to the configuration information, in response to a leaving condition for a height-based measurement reporting event being satisfied.

In some embodiments, the transceiver module 11 is further configured to report the first measurement report to the network device, in response to the height-based measurement reporting event being satisfied, and the content of the first measurement report includes a measurement result of a non-serving cell.

In some embodiments, the processing module 12 is further configured to add an applicable cell to a first cellsTriggeredList, in response to the height-based measurement reporting event being satisfied; and the applicable cell is a non-serving cell detectable by the terminal.

In some embodiments, the transceiver module 11 is further configured to report the first measurement report to the network device, and the content of the first measurement report includes one or more cells in the first cellsTriggeredList.

In some embodiments, the content of the first measurement report includes a first number of cells with best measurement results in the first cellsTriggeredList, where the first number is an integer.

In some embodiments, the transceiver module 11 is further configured to report the first measurement report to the network device, in response to the height-based measurement reporting event being satisfied, the content of the first measurement report includes one or more cells in applicable cells, and the applicable cells are non-serving cells detectable by the terminal.

In some embodiments, the content of the first measurement report includes a second number of cells with best measurement results in the applicable cells, where the second number is an integer.

In some embodiments, the transceiver module 11 is further configured to report a second measurement report to the network device, in response to an event triggering the measurement reporting not being the height-based measurement reporting event, a content of the second measurement report includes one or more cells in a second cellsTriggeredList, and the second cellsTriggeredList is determined in a case where the measurement reporting is triggered by the event which is not the height-based measurement reporting event.

In some embodiments, the content of the first measurement report and/or the content of the second measurement report further include(s) a cell identifier and/or a measurement result corresponding to a cell.

In some embodiments, the configuration information includes at least one of:

information for indicating whether to report a measurement result of a non-serving cell;
a maximum number of non-serving cells included in the first measurement report;
a first threshold corresponding to non-serving cells included in the first measurement report;
configuration for the height-based measurement reporting event; or
configuration for a measurement object.

In some embodiments, the height-based measurement reporting event includes at least one of:

event H1, representing that a height of the terminal is higher than a second threshold; or
event H2, representing that a height of the terminal is lower than a second threshold.

In some embodiments, the processing module 12 is further configured to determine the content of the first measurement report of the height-based triggered measurement reporting according to the configuration information, in response to the configuration information including the information for indicating whether to report a measurement result of a non-serving cell, and the information for indicating whether to report a measurement result of a non-serving cell indicating to report a measurement result of a non-serving cell, and the content of the first measurement report includes a measurement result of a non-serving cell.

In some embodiments, the processing module 12 is further configured to determine the content of the first measurement report of the height-based triggered measurement reporting according to the configuration information, in response to the configuration information including that the maximum number of non-serving cells included in the first measurement report is a third number, the content of the first measurement report includes at most measurement results of the third number of non-serving cells, and the third number is an integer.

In some embodiments, the processing module 12 is further configured to determine the content of the first measurement report of the height-based triggered measurement reporting according to the configuration information, in response to the configuration information including the first threshold corresponding to non-serving cells included in the first measurement report. The content of the first measurement report includes at least one of: a measurement result of a non-serving cell whose measurement result is greater than the first threshold; or a measurement result of a non-serving cell whose measurement result is less than the first threshold.

In some embodiments, the processing module 12 is further configured to: determine the content of the first measurement report of the height-based triggered measurement reporting according to the configuration information, in response to the configuration information including the information for indicating whether to report a measurement result of a non-serving cell, and the information for indicating whether to report a measurement result of a non-serving cell indicating not to report a measurement result of a non-serving cell, where the content of the first measurement report does not include a measurement result of a non-serving cell; or determine the content of the first measurement report of the height-based triggered measurement reporting according to the configuration information, in response to the configuration information including that the maximum number of non-serving cells included in the first measurement report is a third number, and the third number being 0, where the content of the first measurement report does not include a measurement result of a non-serving cell.

In some embodiments, the content of the first measurement report includes at least one of:

a measurement result of a neighboring cell newly available since last measurement reporting;
a measurement result of a neighboring cell newly available since measurement initiation; or
a measurement result of a neighboring cell newly available since measurement reset.

In some embodiments, the configuration information includes information for indicating, to the terminal, whether to trigger the measurement reporting when the leaving condition for the height-based measurement reporting event is satisfied; or the configuration information does not include indication information for indicating, to the terminal, whether to trigger the measurement reporting when the leaving condition for the height-based measurement reporting event is satisfied.

In some embodiments, the transceiver module 11 is configured to: trigger the measurement reporting and report a third measurement report to the network device, in response to the leaving condition for the height-based measurement reporting event being satisfied and the configuration information including first indication information, where the first indication information is configured to indicate, to the terminal, to trigger the measurement reporting when the leaving condition for the height-based measurement reporting event is satisfied; or trigger the measurement reporting and report a third measurement report to the network device, in response to the leaving condition for the height-based measurement reporting event being satisfied, the configuration information including second indication information, and the second indication information being a specific value, where the second indication information being the specific value indicates, to the terminal, to trigger the measurement reporting when the leaving condition for the height-based measurement reporting event is satisfied.

In some embodiments, the transceiver module 11 is further configured to: not trigger the measurement reporting, in response to the leaving condition for the height-based measurement reporting event being satisfied and the configuration information not including first indication information, where the first indication information is configured to indicate, to the terminal, to trigger the measurement reporting when the leaving condition for the height-based measurement reporting event is satisfied; or not trigger the measurement reporting, in response to the leaving condition for the height-based measurement reporting event being satisfied, the configuration information including second indication information, and the second indication information not being a specific value, where the second indication information being the specific value indicates, to the terminal, to trigger the measurement reporting when the leaving condition for the height-based measurement reporting event is satisfied.

In some embodiments, the processing module 12 is further configured to:
stop a periodical reporting timer corresponding to a measurement identifier associated with reporting configuration corresponding to the height-based measurement reporting event, in response to the leaving condition for the height-based measurement reporting event being satisfied.

The communication device 1 is the network device:

The communication device includes a transceiver module 11.

The transceiver module 11 is configured to send configuration information to a terminal, and the configuration information is configured to: indicate a content of a first measurement report to be reported by the terminal in height-based triggered measurement reporting, and/or indicate, to the terminal, whether to trigger the measurement reporting when a leaving condition for a height-based triggering event is satisfied.

In some embodiments, the transceiver module 11 is further configured to receive the first measurement report reported by the terminal in a case where a height-based measurement reporting event is satisfied, and the content of the first measurement report includes a measurement result of a non-serving cell.

In some embodiments, the transceiver module 11 is further configured to receive the first measurement report reported by the terminal in a case where a height-based measurement reporting event is satisfied, the content of the first measurement report includes one or more cells in applicable cells added by the terminal to a first cellsTriggeredList in the case where the height-based measurement reporting event is satisfied, and the applicable cells are non-serving cells detectable by the terminal.

In some embodiments, the content of the first measurement report includes a first number of cells with best measurement results in the first cellsTriggeredList, where the first number is an integer.

In some embodiments, the transceiver module 11 is further configured to receive the first measurement report reported by the terminal in a case where a height-based measurement reporting event is satisfied, the content of the first measurement report includes one or more cells in applicable cells, and the applicable cells are non-serving cells detectable by the terminal.

In some embodiments, the content of the first measurement report includes a second number of cells with best measurement results in the applicable cells, where the second number is an integer.

In some embodiments, the transceiver module 11 is further configured to receive a second measurement report reported by the terminal in a case where an event that triggers the measurement reporting and that is not a height-based measurement reporting event is satisfied, where a content of the second measurement report includes one or more cells in a second cellsTriggeredList, and the second cellsTriggeredList is determined in a case where the measurement reporting is triggered by the event which is not the height-based measurement reporting event.

In some embodiments, the content of the first measurement report and/or the content of the second measurement report further include(s) a cell identifier and/or a measurement result corresponding to a cell.

In some embodiments, the configuration information includes at least one of:

information for indicating whether to report a measurement result of a non-serving cell;
a maximum number of non-serving cells included in the first measurement report;
a first threshold corresponding to non-serving cells included in the first measurement report;

configuration for a height-based measurement reporting event; or
configuration for a measurement object.

In some embodiments, the height-based measurement reporting event includes at least one of:

event H1, representing that a height of the terminal is higher than a second threshold; or
event H2, representing that a height of the terminal is lower than a second threshold.

In some embodiments, the content of the first measurement report is determined by the terminal according to the configuration information in a case where the configuration information includes the information for indicating whether to report a measurement result of a non-serving cell, and the information for indicating whether to report a measurement result of a non-serving cell indicates to report a measurement result of a non-serving cell.

In some embodiments, the content of the first measurement report includes at most measurement results of a third number of non-serving cells, where the third number is an integer. The content of the first measurement report is determined by the terminal according to the configuration information in a case where the configuration information includes that the maximum number of non-serving cells included in the first measurement report is the third number.

In some embodiments, the content of the first measurement report includes at least one of: a measurement result of a non-serving cell whose measurement result is greater than the first threshold; or a measurement result of a non-serving cell whose measurement result is less than the first threshold. The content of the first measurement report is determined by the terminal according to the configuration information in a case where the configuration information includes the first threshold corresponding to non-serving cells included in the first measurement report.

In some embodiments, the content of the first measurement report does not include a measurement result of a non-serving cell. The content of the first measurement report is determined by the terminal according to the configuration information in a case where the configuration information includes the information for indicating whether to report a measurement result of a non-serving cell, and the information for indicating whether to report a measurement result of a non-serving cell indicates not to report a measurement result of a non-serving cell; or the content of the first measurement report is determined by the terminal according to the configuration information in a case where the configuration information includes that the maximum number of non-serving cells included in the first measurement report is a third number, and the third number is 0.

In some embodiments, the content of the first measurement report includes at least one of:

a measurement result of a neighboring cell newly available since last measurement reporting;
a measurement result of a neighboring cell newly available since measurement initiation; or
a measurement result of a neighboring cell newly available since measurement reset.

In some embodiments, the configuration information includes information for indicating, to the terminal, whether to trigger the measurement reporting when a leaving condition for a height-based measurement reporting event is satisfied; or the configuration information does not include information for indicating, to the terminal, whether to trigger the measurement reporting when a leaving condition for a height-based measurement reporting event is satisfied.

In some embodiments, the transceiver module 11 is further configured to: receive a third measurement report reported by the terminal in the measurement reporting triggered in a case where a leaving condition for a height-based measurement reporting event is satisfied and the configuration information includes first indication information, where the first indication information is further configured to indicate, to the terminal, to trigger the measurement reporting when the leaving condition for the height-based measurement reporting event is satisfied; or receive a third measurement report reported by the terminal in the measurement reporting triggered in a case where a leaving condition for a height-based measurement reporting event is satisfied, the configuration information includes second indication information, and the second indication information is a specific value, where the second indication information being the specific value indicates, to the terminal, to trigger the measurement reporting when the leaving condition for the height-based measurement reporting event is satisfied.

With respect to the communication device in the above embodiments, the specific manners of individual modules therein for performing operations have been described in detail in the method embodiments, which will not be elaborated herein.

The communication device 1 provided in the above embodiments of the present invention achieves the same or similar beneficial effects as achieved by the method for measurement reporting described in some of the above embodiments, which will not be described again here.

Referring to FIG. 21, FIG. 21 is a schematic block diagram of another communication device 1000 according to embodiments of the present invention. The communication device 1000 may be a network device, may also be a terminal, may also be a chip, a chip system, or a processor that supports the network device to implement the above method, or may also be a chip, a chip system, or a processor that supports the terminal to implement the above method. The communication device 1000 may be used to implement the methods as described in the above method embodiments, and for details, reference may be made to the descriptions on the above method embodiments.

The communication device 1000 may include one or more processors 1001. The processor 1001 may be a general-purpose processor or a special-purpose processor. For example, it may be a baseband processor or a central processing unit. The baseband processor may be configured to process a communication protocol and communication data, and the central processing unit may be configured to control the communication device (such as a network device, a baseband chip, a terminal, a terminal chip, a DU or a CU, etc.), execute computer programs, and process data of computer programs.

Optionally, the communication device 1000 may further include one or more memories 1002 that may have stored therein computer programs 1004. The memory 1002 executes the computer programs 1004 to cause the communication device 1000 to implement the methods as described in the above method embodiments. Optionally, the memory 1002 may have stored therein data. The communication device 1000 and the memory 1002 may be set separately or integrated together.

Optionally, the communication device 1000 may further include a transceiver 1005 and an antenna 1006. The transceiver 1005 may be called a transceiver element, a transceiver machine, a transceiver circuit or the like, for implementing a transceiver function. The transceiver 1005 may include a receiver and a transmitter. The receiver may be called a receiving machine, a receiving circuit or the like, for implementing a receiving function. The transmitter may be called a sending machine, a sending circuit or the like for implementing a sending function.

Optionally, the communication device 1000 may further include one or more interface circuits 1007. The interface circuit 1007 is configured to receive code instructions and transmit the code instructions to the processor 1001. The processor 1001 runs the code instructions to enable the communication device 1000 to execute the methods as described in the foregoing method embodiments.

The communication device 1000 is the first terminal: the transceiver 1005 is configured to perform S31 in FIG. 3; S41 and S43 in FIG. 4; S51 and S54 in FIG. 5; S61 and S63 in FIG. 6; S71 and S73 in FIG. 7; S81 in FIG. 8; S91 in FIG. 9; S101 in FIG. 10; S111 in FIG. 11; S121 in FIG. 12; S131 and S133 in FIG. 13; S141 in FIG. 14; S151 in FIG. 15; S161 in FIG. 16; S171 in FIG. 17; S181 in FIG. 18; and the processor 1001 is used to perform S32 in FIG. 3; S42 in FIG. 4; S52 and S53 in FIG. 5; S62 in FIG. 6; S72 in FIG. 7; S82 in FIG. 8; S92 in FIG. 9; S102 in FIG. 10; S112 in FIG. 11; S122 in FIG. 12; S132 in FIG. 13; S142 in FIG. 14; S152 in FIG. 15; S162 in FIG. 16; S172 in FIG. 17; S182 in FIG. 18.

The communication device 1000 is the network device: the transceiver 1005 is configured to perform S191 in FIG. 19.

In an implementation, the processor 1001 may include the transceiver configured to implement receiving and sending functions. For example, the transceiver may be a transceiver circuit, an interface, or an interface circuit. The transceiver circuit, the interface or the interface circuit configured to implement the receiving and sending functions may be separated or may be integrated together. The above transceiver circuit, interface or interface circuit may be configured to read and write codes/data, or the above transceiver circuit, interface or interface circuit may be configured to transmit or transfer signals.

In an implementation, the processor 1001 may have stored therein computer programs that, when run on the processor 1001, cause the communication device 1000 to implement the method as described in the foregoing method embodiments. The computer programs 1003 may be solidified in the processor 1001, and in this case, the processor 1001 may be implemented by hardware.

In an implementation, the communication device 1000 may include a circuit, and the circuit may implement the sending, receiving or communicating function in the foregoing method embodiments. The processor and the transceiver described in the present invention may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured using various IC process technologies, such as a complementary metal oxide semiconductor (CMOS), an nMetal-oxide-semiconductor (NMOS), a P-type metal oxide semiconductor (also called positive channel metal oxide semiconductor, PMOS), a bipolar junction transistor (BJT), a bipolar CMOS (BiCMOS), silicon germanium (SiGe), gallium arsenide (GaAs), etc.

The communication device described in the above embodiments may be the terminal, but the scope of the communication device described in the present invention is not limited thereto, and the structure of the communication device is not limited by FIG. 21. The communication device may be a stand-alone device or may be a part of a larger device. For example, the communication device may be:

(1) a stand-alone integrated circuit (IC), or a chip, or a chip system or a subsystem;
(2) a set of one or more ICs, optionally, the set of ICs may also include a storage component for storing data and computer programs;
(3) an ASIC, such as a modem;
(4) a module that may be embedded in other devices;
(5) a receiver, a terminal, an intelligent terminal, a cellular phone, a wireless device, a handheld machine, a mobile unit, a vehicle device, a network device, a cloud device, an artificial intelligence device, etc.;

(6) others.

For the case where the communication device may be a chip or a chip system, please refer to FIG. 22, which is a schematic block diagram of a chip according to embodiments of the present invention.

The chip 1100 includes a processor 1101 and an interface 1103. The chip 1100 may include one or more processors 1101, and a plurality of interfaces 1103.

For the case where the chip is used to implement the functions of the network device in the embodiments of the present invention:

The interface 1103 is configured to receive code instructions and transmit the code instructions to the processor.

The processor 1101 is configured to run the code instructions to perform the method for measurement reporting as described in some of the above embodiments.

For the case where the chip is used to implement the functions of the terminal in the embodiments of the present invention:

The interface 1103 is configured to receive code instructions and transmit the code instructions to the processor.

The processor 1101 is configured to run the code instructions to perform the method for measurement reporting as described in some of the above embodiments.

Optionally, the chip 1100 further includes a memory 1102 for storing necessary computer programs and data.

Those skilled in the art may also understand that various illustrative logical blocks and steps listed in embodiments of the present invention may be implemented by electronic hardware, computer software, or a combination thereof. Whether such functions are implemented by hardware or software depends on specific applications and design requirements of an overall system. For each specific application, those skilled in the art may use various methods to implement the described functions, but such implementations should not be understood as beyond the protection scope of embodiments of the present invention.

Embodiments of the present invention also provide a system for measurement reporting. The system includes the communication device as the terminal and the communication device as the network device as described in the aforementioned embodiments in FIG. 20, or the system includes the communication device as the terminal and the communication device as the network device as described in the aforementioned embodiments in FIG. 21.

The present invention also provides a readable storage medium having stored therein instructions that, when executed by a computer, cause functions of any of the above method embodiments to be implemented.

The present invention also provides a computer program product that, when executed by a computer, causes functions of any of the above method embodiments to be implemented.

The above embodiments may be implemented in whole or in part by software, hardware, firmware or any combination thereof. When implemented using the software, the above embodiments may be implemented in whole or in part in a form of the computer program product. The computer program product includes one or more computer programs. When the computer program is loaded and executed on the computer, all or part of the processes or functions according to embodiments of the present invention will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website site, computer, server or data center to another website site, computer, server or data center in a wired manner (such as via a coaxial cable, an optical fiber, a digital subscriber line (DSL)) or a wireless manner (such as via infrared, wireless, or microwave, etc.). The computer-readable storage medium may be any available medium that can be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)) etc.

Those of ordinary skill in the art can understand that the first, second, and other numeral numbers involved in the present invention are only for convenience of description, and are not intended to limit the scope of embodiments of the present invention, nor are they intended to represent a sequential order.

The term "at least one" used in the present invention may also be described as one or more, and the term "a plurality of" may cover two, three, four or more, the term "and/or", describing the association relationship of the associated objects, indicating that there may exist three relationships, for example, the expression "A and/or B" may indicate three cases: A alone, both A and B, and B alone, where A and B may be singular or plural. The character *"/"* generally indicates that the associated objects are in an "or" relationship. The expression "at least one of ..." or similar expression refers to any combination of the listed items, including any single item or any combination of items. For example, the expression "at least one of a, b or c" may mean: a, b, c, a combination of a and b, a combination of a and c, a combination of b and c, or a combination of a, b and c, where a, b and c each may be single or multiple, which will not be limited in the present invention. In the embodiments of the present invention, for a certain kind of technical features, the technical features in this kind of technical features are distinguished by terms like "first", "second", "third", "A", "B", "C" and "D", etc., and these technical features described with the "first", "second", "third", "A", "B", "C" and "D" have no order of priority and have no order of size.

The correspondence shown in each table in the present invention may be configured or predefined. The values of various information in each table are just examples, and may be configured as other values, which are not limited in the present invention. When configuring a correspondence between the information and various parameters, it is not necessary to configure all the correspondences shown in the tables. For example, the correspondences shown in some rows of a table in the present invention may not be configured. For another example, appropriate deformations or adjustments (such as splitting, merging, and so on) can be made based on the above table. The names of parameters shown in the titles of the above tables may also adopt other names understandable by the communication device, and the values or representations of the parameters may also be other values or representations understandable by the communication device. When the above tables are implemented, other data structures may also be used, for example, arrays, queues, containers, stacks, linear tables, pointers, linked lists, trees, graphs, structural body, classes, heaps, or hash tables may be used.

The term "predefinition" in the present invention may be understood as definition, definition in advance, storage, pre-storage, pre-negotiation, pre-configuration, curing, or pre-firing.

Those of ordinary skill in the art can appreciate that the units and algorithm steps of various examples described in conjunction with embodiments disclosed herein may be implemented by the electronic hardware, or a combination of the computer software and the electronic hardware. Whether these functions are executed by the hardware or the software depends on the specific applications and design constraints of the technical solution. For each particular application, those skilled in the art may use different methods to implement the described functions, but such implementation should not be considered beyond the scope of the present invention.

Those skilled in the art can clearly understand that for the convenience and brevity of the description, the specific working process of the above-described system, device and unit may refer to the corresponding process in the foregoing method embodiments, which will not be repeated here.

The above only describes some specific implementations of the present invention, but the protection scope of the present invention is not limited thereto. Any changes or substitutions that are conceivable to those skilled in the art within the technical scope of the present invention should fall within the protection scope of the present invention. Therefore, the protection scope of the present invention should be determined by the protection scope of the claims.

## Claims

1. A method for measurement reporting, performed by a terminal, comprising:

   receiving configuration information sent by a network device; and
   determining a content of a first measurement report of height-based triggered measurement reporting according to the configuration information; and/or
   determining whether to trigger the measurement reporting according to the configuration information, in response to a leaving condition for a height-based measurement reporting event being satisfied.

2. The method according to claim 1, further comprising:
   reporting the first measurement report to the network device, in response to the height-based measurement reporting event being satisfied, wherein the content of the first measurement report comprises a measurement result of a non-serving cell.

3. The method according to claim 1 or 2, further comprising:
   adding an applicable cell to a first cellsTriggeredList, in response to the height-based measurement reporting event being satisfied; wherein the applicable cell is a non-serving cell detectable by the terminal.

4. The method according to claim 3, comprising:
   reporting the first measurement report to the network device, wherein the content of the first measurement report comprises one or more cells in the first cellsTriggeredList.

5. The method according to claim 4, wherein the content of the first measurement report comprises a first number of cells with best measurement results in the first cellsTriggeredList, where the first number is an integer.

6. The method according to claim 1 or 2, comprising:
   reporting the first measurement report to the network device, in response to the height-based measurement reporting event being satisfied, wherein the content of the first measurement report comprises one or more cells in applicable cells, and the applicable cells are non-serving cells detectable by the terminal.

7. The method according to claim 6, wherein the content of the first measurement report comprises a second number of cells with best measurement results in the applicable cells, where the second number is an integer.

8. The method according to claim 1, 6 or 7, comprising: reporting a second measurement report to the network device, in response to an event triggering the measurement reporting not being the height-based measurement reporting event, wherein a content of the second measurement report comprises one or more cells in a second cellsTriggeredList, and the second cellsTriggeredList is determined in a case where the measurement reporting is triggered by the event which is not the height-based measurement reporting event.

9. The method according to any one of claims 4 to 8, wherein the content of the first measurement report and/or the content of the second measurement report further comprise(s) a cell identifier and/or a measurement result corresponding to a cell.

10. The method according to claim 1 or 2, wherein the configuration information comprises at least one of:

   information for indicating whether to report a measurement result of a non-serving cell;
   a maximum number of non-serving cells comprised in the first measurement report;
   a first threshold corresponding to non-serving cells comprised in the first measurement report;
   configuration for the height-based measurement reporting event; or
   configuration for a measurement object.

11. The method according to claim 10, wherein the height-based measurement reporting event comprises at least one of:

   event H1, representing that a height of the terminal is higher than a second threshold; or
   event H2, representing that a height of the terminal is lower than a second threshold.

12. The method according to claim 10 or 11, wherein determining the content of the first measurement report of the height-based triggered measurement reporting according to the configuration information comprises:
determining the content of the first measurement report of the height-based triggered measurement reporting according to the configuration information, in response to the configuration information comprising the information for indicating whether to report a measurement result of a non-serving cell, and the information for indicating whether to report a measurement result of a non-serving cell indicating to report a measurement result of a non-serving cell, wherein the content of the first measurement report comprises a measurement result of a non-serving cell.

13. The method according to any one of claims 10 to 12, wherein determining the content of the first measurement report of the height-based triggered measurement reporting according to the configuration information comprises:
determining the content of the first measurement report of the height-based triggered measurement reporting according to the configuration information, in response to the configuration information comprising that the maximum number of non-serving cells comprised in the first measurement report is a third number, wherein the content of the first measurement report comprises at most measurement results of the third number of non-serving cells, and the third number is an integer.

14. The method according to any one of claims 10 to 13, wherein determining the content of the first measurement report of the height-based triggered measurement reporting according to the configuration information comprises:

   determining the content of the first measurement report of the height-based triggered measurement reporting according to the configuration information, in response to the configuration information comprising the first threshold corresponding to non-serving cells comprised in the first measurement report, wherein the content of the first measurement report comprises at least one of:

      a measurement result of a non-serving cell whose measurement result is greater than the first threshold; or
      a measurement result of a non-serving cell whose measurement result is less than the first threshold.

15. The method according to any one of claims 10 to 13, wherein determining the content of the first measurement report of the height-based triggered measurement reporting according to the configuration information comprises:

   determining the content of the first measurement report of the height-based triggered measurement reporting according to the configuration information, in response to the configuration information comprising the information for indicating whether to report a measurement result of a non-serving cell, and the information for indicating whether to report a measurement result of a non-serving cell indicating not to report a measurement result of a non-serving cell,

wherein the content of the first measurement report does not comprise a measurement result of a non-serving cell; or

determining the content of the first measurement report of the height-based triggered measurement reporting according to the configuration information, in response to the configuration information comprising that the maximum number of non-serving cells comprised in the first measurement report is a third number, and the third number is 0, wherein the content of the first measurement report does not comprise a measurement result of a non-serving cell.

16. The method according to any one of claims 12 to 14, wherein the content of the first measurement report comprises at least one of:

a measurement result of a neighboring cell newly available since last measurement reporting;
a measurement result of a neighboring cell newly available since measurement initiation; or
a measurement result of a neighboring cell newly available since measurement reset.

17. The method according to claim 1, wherein the configuration information comprises information for indicating, to the terminal, whether to trigger the measurement reporting when the leaving condition for the height-based measurement reporting event is satisfied; or
the configuration information does not comprise indication information for indicating, to the terminal, whether to trigger the measurement reporting when the leaving condition for the height-based measurement reporting event is satisfied.

18. The method according to claim 1 or 17, wherein determining whether to trigger the measurement reporting according to the configuration information in response to the leaving condition for the height-based measurement reporting event being satisfied comprises:

triggering the measurement reporting and reporting a third measurement report to the network device, in response to the leaving condition for the height-based measurement reporting event being satisfied and the configuration information comprising first indication information, wherein the first indication information is configured to indicate, to the terminal, to trigger the measurement reporting when the leaving condition for the height-based measurement reporting event is satisfied; or
triggering the measurement reporting and reporting a third measurement report to the network device, in response to the leaving condition for the height-based measurement reporting event being satisfied, the configuration information comprising second indication information, and the second indication information being a specific value, wherein the second indication information being the specific value indicates, to the terminal, to trigger the measurement reporting when the leaving condition for the height-based measurement reporting event is satisfied.

19. The method according to claim 1 or 17, wherein determining whether to trigger the measurement reporting according to the configuration information in response to the leaving condition for the height-based measurement reporting event being satisfied comprises:

not triggering the measurement reporting, in response to the leaving condition for the height-based measurement reporting event being satisfied and the configuration information not comprising first indication information, wherein the first indication information is configured to indicate, to the terminal, to trigger the measurement reporting when the leaving condition for the height-based measurement reporting event is satisfied; or
not triggering the measurement reporting, in response to the leaving condition for the height-based measurement reporting event being satisfied, the configuration information comprising second indication information, and the second indication information not being a specific value, wherein the second indication information being the specific value indicates, to the terminal, to trigger the measurement reporting when the leaving condition for the height-based measurement reporting event is satisfied.

20. The method according to claim 1, further comprising:
stopping a periodical reporting timer corresponding to a measurement identifier associated with reporting configuration corresponding to the height-based measurement reporting event, in response to the leaving condition for the height-based measurement reporting event being satisfied.

21. A method for measurement reporting, performed by a network device, comprising:
sending configuration information to a terminal, wherein the configuration information is configured to: indicate a content of a first measurement report to be reported by the terminal in height-based triggered measurement reporting, and/or indicate, to the terminal, whether to trigger the measurement reporting when a leaving condition for a height-based triggering event is satisfied.

**22.** The method according to claim 21, further comprising:
receiving the first measurement report reported by the terminal in a case where the height-based measurement reporting event is satisfied, wherein the content of the first measurement report comprises a measurement result of a non-serving cell.

**23.** The method according to claim 21 or 22, further comprising:
receiving the first measurement report reported by the terminal in a case where the height-based measurement reporting event is satisfied, wherein the content of the first measurement report comprises one or more cells in applicable cells added by the terminal to a first cellsTriggeredList in the case where the height-based measurement reporting event is satisfied, wherein the applicable cells are non-serving cells detectable by the terminal.

**24.** The method according to claim 23, wherein the content of the first measurement report comprises a first number of cells with best measurement results in the first cellsTriggeredList, where the first number is an integer.

**25.** The method according to claim 21 or 22, further comprising:
receiving the first measurement report reported by the terminal in a case where the height-based measurement reporting event is satisfied, wherein the content of the first measurement report comprises one or more cells in applicable cells, and the applicable cells are non-serving cells detectable by the terminal.

**26.** The method according to claim 25, wherein the content of the first measurement report comprises a second number of cells with best measurement results in the applicable cells, where the second number is an integer.

**27.** The method according to claim 21, 25 or 26, further comprising:
receiving a second measurement report reported by the terminal in a case where an event that triggers the measurement reporting and that is not the height-based measurement reporting event is satisfied, wherein a content of the second measurement report comprises one or more cells in a second cellsTriggeredList, and the second cellsTriggeredList is determined in a case where the measurement reporting is triggered by the event which is not the height-based measurement reporting event.

**28.** The method according to any one of claims 22 to 27, wherein the content of the first measurement report and/or the content of the second measurement report further comprise(s) a cell identifier and/or a measurement result corresponding to a cell.

**29.** The method according to claim 21 or 22, wherein the configuration information comprises at least one of:

information for indicating whether to report a measurement result of a non-serving cell;
a maximum number of non-serving cells comprised in the first measurement report;
a first threshold corresponding to non-serving cells comprised in the first measurement report;
configuration for the height-based measurement reporting event; or
configuration for a measurement object.

**30.** The method according to claim 29, wherein the height-based measurement reporting event comprises at least one of:

event H1, representing that a height of the terminal is higher than a second threshold; or
event H2, representing that a height of the terminal is lower than a second threshold.

**31.** The method according to claim 29 or 30, wherein the content of the first measurement report is determined by the terminal according to the configuration information in a case where the configuration information comprises the information for indicating whether to report a measurement result of a non-serving cell, and the information for indicating whether to report a measurement result of a non-serving cell indicates to report a measurement result of a non-serving cell.

**32.** The method according to any one of claims 29 to 31, wherein the content of the first measurement report comprises at most measurement results of a third number of non-serving cells, where the third number is an integer,
wherein the content of the first measurement report is determined by the terminal according to the configuration information in a case where the configuration information comprises that the maximum number of non-serving cells comprised in the first measurement report is the third number.

**33.** The method according to any one of claims 29 to 32, wherein the content of the first measurement report comprises at least one of:

a measurement result of a non-serving cell whose measurement result is greater than the first threshold; or
a measurement result of a non-serving cell whose measurement result is less than the first threshold;

wherein the content of the first measurement report is determined by the terminal according to the configuration information in a case where the configuration information comprises the first threshold corresponding to non-serving cells comprised in the first measurement report.

34. The method according to any one of claims 29 to 32, wherein the content of the first measurement report does not comprise a measurement result of a non-serving cell,

wherein the content of the first measurement report is determined by the terminal according to the configuration information in a case where the configuration information comprises the information for indicating whether to report a measurement result of a non-serving cell, and the information for indicating whether to report a measurement result of a non-serving cell indicates not to report a measurement result of a non-serving cell; or
the content of the first measurement report is determined by the terminal according to the configuration information in a case where the configuration information comprises that the maximum number of non-serving cells comprised in the first measurement report is a third number, and the third number is 0.

35. The method according to any one of claims 31 to 33, wherein the content of the first measurement report comprises at least one of:

a measurement result of a neighboring cell newly available since last measurement reporting;
a measurement result of a neighboring cell newly available since measurement initiation; or
a measurement result of a neighboring cell newly available since measurement reset.

36. The method according to claim 21, wherein the configuration information comprises information for indicating, to the terminal, whether to trigger the measurement reporting when a leaving condition for a height-based measurement reporting event is satisfied; or
the configuration information does not comprise information for indicating, to the terminal, whether to trigger the measurement reporting when a leaving condition for a height-based measurement reporting event is satisfied.

37. The method according to claim 21 or 36, further comprising:

receiving a third measurement report reported by the terminal in the measurement reporting triggered in a case where the leaving condition for the height-based measurement reporting event is satisfied and the configuration information comprises first indication information, wherein the first indication information is configured to indicate, to the terminal, to trigger the measurement reporting when the leaving condition for the height-based measurement reporting event is satisfied; or
receiving a third measurement report reported by the terminal in the measurement reporting triggered in a case where the leaving condition for the height-based measurement reporting event is satisfied, the configuration information comprises second indication information, and the second indication information is a specific value, wherein the second indication information being the specific value indicates, to the terminal, to trigger the measurement reporting when the leaving condition for the height-based measurement reporting event is satisfied.

38. A communication device, comprising:

a transceiver module, configured to receive configuration information sent by a network device; and
a processing module, configured to: determine a content of a first measurement report of height-based triggered measurement reporting according to the configuration information; and/or determine whether to trigger measurement reporting according to the configuration information in response to a leaving condition for a height-based measurement reporting event being satisfied.

39. A communication device, comprising:
a transceiver module, configured to send configuration information to a terminal, wherein the configuration information is configured to: indicate a content of a first measurement report to be reported by the terminal in height-based triggered measurement reporting, and/or indicate, to the terminal, whether to trigger measurement reporting in a case where a leaving condition for a height-based triggering event is satisfied.

40. A communication device, comprising:

a processor, and
a memory, having stored therein computer programs,
wherein the processor is configured to execute the computer programs stored in the memory to cause the device to perform the method according to any one of claims 1 to 20, or the processor is configured to execute the computer programs stored in the memory to cause the device to perform the method according to any one of claims 21 to 37.

41. A communication device, comprising:

a processor, and
an interface circuit, configured to receive code instructions and transmit the code instructions to the processor,
wherein the processor is configured to run the code instructions to perform the method according to any one of claims 1 to 20, or to run the code instructions to perform the method according to any one of claims 21 to 37.

42. A computer-readable storage medium having stored therein instructions that, when executed, cause the method according to any one of claims 1 to 20 or the method according to any one of claims 21 to 37 to be implemented.

FIG. 1

FIG. 2

FIG. 3

FIG. 4

configuration information sent by a network device is received — S51

a content of a first measurement report of height-based triggered measurement reporting is determined according to the configuration information — S52

in response to the height-based measurement reporting event being satisfied, an applicable cell is added to a first cellsTriggeredList; and the applicable cell is a non-serving cell detectable by the terminal — S53

the first measurement report is reported to the network device, and the content of the first measurement report includes one or more cells in the first cellsTriggeredList — S54

FIG. 5

configuration information sent by a network device is received — S61

a content of a first measurement report of height-based triggered measurement reporting is determined according to the configuration information — S62

in response to the height-based measurement reporting event being satisfied, the first measurement report is reported to the network device, the content of the first measurement report includes one or more cell in applicable cells, and the applicable cells are non-serving cells detectable by the terminal — S63

FIG. 6

configuration information sent by a network device is received — S71

a content of a first measurement report of height-based triggered measurement reporting is determined according to the configuration information — S72

in response to an event triggering the measurement reporting not being the height-based measurement reporting event, a second measurement report is reported to the network device, a content of the second measurement report includes one or more cells in a second cellsTriggeredList, and the second cellsTriggeredList is determined in a case where the measurement reporting is triggered by the event which is not the height-based measurement reporting event — S73

FIG. 7

configuration information sent by a network device is received, and the configuration information includes information for indicating whether to report a measurement result of a non-serving cell — S81

in response to the configuration information including the information for indicating whether to report a measurement result of a non-serving cell, and the information for indicating whether to report a measurement result of a non-serving cell indicating to report a measurement result of a non-serving cell, the content of the first measurement report of the height-based triggered measurement reporting is determined according to the configuration information, and the content of the first measurement report includes a measurement result of a non-serving cell — S82

FIG. 8

configuration information sent by a network device is received, and the configuration information includes a maximum number of non-serving cells included in the first measurement report / S91

in response to the configuration information including that the maximum number of non-serving cells included in the first measurement report is a third number, the content of the first measurement report of the height-based triggered measurement reporting is determined according to the configuration information, and the content of the first measurement report includes at most measurement results of the third number of non-serving cells, and the third number is an integer / S92

FIG. 9

configuration information sent by a network device is received, and the configuration information includes a first threshold corresponding to non-serving cells included in the first measurement report / S101

in response to the configuration information including the first threshold corresponding to non-serving cells included in the first measurement report, the content of the first measurement report of the height-based triggered measurement reporting is determined according to the configuration information, where the content of the first measurement report includes: a measurement result of a non-serving cell whose measurement result is greater than the first threshold, and/or a measurement result of a non-serving cell whose measurement result is less than the first threshold / S102

FIG. 10

configuration information sent by a network device is received, and the configuration information includes information for indicating whether to report a measurement result of a non-serving cell, and the information for indicating whether to report a measurement result of a non-serving cell indicates not to report a measurement result of a non-serving cell / S111

in response to the configuration information including the information for indicating whether to report a measurement result of a non-serving cell, and the information for indicating whether to report a measurement result of a non-serving cell indicating not to report a measurement result of a non-serving cell, the content of the first measurement report of the height-based triggered measurement reporting is determined according to the configuration information, and the content of the first measurement report does not include a measurement result of a non-serving cell / S112

FIG. 11

configuration information sent by a network device is received, and the configuration information includes that the maximum number of non-serving cells included in the first measurement report is a third number / S121

in response to the configuration information including that the maximum number of non-serving cells included in the first measurement report is a third number, and the third number being 0, the content of the first measurement report of the height-based triggered measurement reporting is determined according to the configuration information, and the content of the first measurement report does not include a measurement result of a non-serving cell / S122

FIG. 12

| configuration information sent by a network device is received | S131 |

↓

| a content of a first measurement report of height-based triggered measurement reporting is determined according to the configuration information | S132 |

↓

| in response to the height-based measurement reporting event being satisfied, the first measurement report is reported to the network device, and the content of the first measurement report includes at least one of: a measurement result of a neighboring cell newly available since last measurement reporting; a measurement result of a neighboring cell newly available since measurement initiation; or a measurement result of a neighboring cell newly available since measurement reset | S133 |

FIG. 13

| configuration information sent by a network device is received | S141 |

↓

| in response to the leaving condition for the height-based measurement reporting event being satisfied, and the configuration information including first indication information, the measurement reporting is triggered, and a third measurement report is reported to the network device, where the first indication information is configured to indicate, to the terminal, to trigger the measurement reporting when the leaving condition for the height-based measurement reporting event is satisfied | S142 |

FIG. 14

| configuration information sent by a network device is received | S151 |

↓

| in response to a leaving condition for height-based measurement reporting event being satisfied, the configuration information including second indication information, and the second indication information being a specific value, measurement reporting is triggered, a third measurement report is reported to the network device, where the second indication information being the specific value indicates, to the terminal, to trigger the measurement reporting when the leaving condition for the height-based measurement reporting event is satisfied | S152 |

FIG. 15

| configuration information sent by a network device is received | S161 |

↓

| in response to a leaving condition for height-based measurement reporting event being satisfied, and the configuration information not including first indication information, the measurement reporting is not triggered, where the first indication information is configured to indicate, to the terminal, to trigger the measurement reporting when the leaving condition for the height-based measurement reporting event is satisfied | S162 |

FIG. 16

| configuration information sent by a network device is received | S171 |

↓

| in response to a leaving condition for height-based measurement reporting event being satisfied, the configuration information including second indication information, and the second indication information not being a specific value, measurement reporting is not triggered, where the second indication information being the specific value indicates, to the terminal, to trigger the measurement reporting when the leaving condition for the height-based measurement reporting event is satisfied | S172 |

FIG. 17

| configuration information sent by a network device is received | S181 |

| a periodical reporting timer corresponding to a measurement identifier associated with reporting configuration corresponding to the height-based measurement reporting event is stopped, in response to the leaving condition for the height-based measurement reporting event being satisfied | S182 |

FIG. 18

| configuration information is sent to a terminal, and the configuration information is configured to: indicate a content of a first measurement report to be reported by the terminal in height-based triggered measurement reporting, and/or indicate, to the terminal, whether to trigger the measurement reporting when a leaving condition for a height-based triggering event is satisfied | S191 |

FIG. 19

1

communication device

11

transceiver module

12

processing module

FIG. 20

1000

1001 processor
1003 computer program

1002 memory
1004 computer program

1005 transceiver
receiver
transmitter

1006 antenna

1007 interface circuit

FIG. 21

1100

1101 processor

1103 interface

1102 memory

FIG. 22

## INTERNATIONAL SEARCH REPORT

| International application No. |
| --- |
| **PCT/CN2022/115969** |

| A. | CLASSIFICATION OF SUBJECT MATTER |
| --- | --- |

H04L27/00(2006.01)i;H04W24/10(2009.01)i;H04W36/20(2009.01)i

According to International Patent Classification (IPC) or to both national classification and IPC

| B. | FIELDS SEARCHED |
| --- | --- |

Minimum documentation searched (classification system followed by classification symbols)

IPC: H04L; H04W

Documentation searched other than minimum documentation to the extent that such documents are included in the fields searched

Electronic data base consulted during the international search (name of data base and, where practicable, search terms used)

CNTXT; VEN; CNKI; 3GPP: 无人机, 飞行器, 空中设备, 进入条件, 离开条件, 高度, 测量, 上报, 事件, 非服务小区, UAV, entering condition, leaving condition, measure, H1, H2, report, height, non-serving cell

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2019028915 A1 (HUAWEI TECHNOLOGIES CO., LTD.) 14 February 2019 (2019-02-14) description, paragraphs [0085]-[0177] | 1-42 |
| X | CN 110012497 A (RESEARCH INSTITUTE CHINA MOBILE COMMUNICATIONS CORP. et al.) 12 July 2019 (2019-07-12) description, paragraphs [0085]-[0177] | 1-42 |
| X | WO 2019056981 A1 (SONY CORP. et al.) 28 March 2019 (2019-03-28) description, paragraphs [59]-[249] | 1-42 |
| A | US 2021195492 A1 (KYOCERA CORP.) 24 June 2021 (2021-06-24) entire document | 1-42 |
| A | NTT DOCOMO, INC. "Measurements Reporting Enhancements for UAV UE" *3GPP TSG-RAN2#99, R2-1709396*, 11 August 2017 (2017-08-11), text, section 2 | 1-42 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **09 March 2023** | **30 March 2023** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

EP 4 583 466 A1

## INTERNATIONAL SEARCH REPORT
### Information on patent family members

International application No.

**PCT/CN2022/115969**

| Patent document cited in search report | | | Publication date (day/month/year) | Patent family member(s) | | | Publication date (day/month/year) |
|---|---|---|---|---|---|---|---|
| WO | 2019028915 | A1 | 14 February 2019 | US | 2020187033 | A1 | 11 June 2020 |
| | | | | EP | 3648509 | A1 | 06 May 2020 |
| | | | | EP | 3648509 | A4 | 03 June 2020 |
| | | | | EP | 3648509 | B1 | 06 October 2021 |
| CN | 110012497 | A | 12 July 2019 | None | | | |
| WO | 2019056981 | A1 | 28 March 2019 | US | 2020236573 | A1 | 23 July 2020 |
| | | | | US | 11265749 | B2 | 01 March 2022 |
| | | | | EP | 3675552 | A1 | 01 July 2020 |
| | | | | EP | 3675552 | A4 | 28 October 2020 |
| US | 2021195492 | A1 | 24 June 2021 | JP | 2021506193 | A | 18 February 2021 |
| | | | | WO | 2019099384 | A1 | 23 May 2019 |
| | | | | US | 11153790 | B2 | 19 October 2021 |
| | | | | JP | 2021506192 | A | 18 February 2021 |
| | | | | JP | 6971410 | B2 | 24 November 2021 |
| | | | | WO | 2019099386 | A1 | 23 May 2019 |
| | | | | WO | 2019099386 | A8 | 17 December 2020 |
| | | | | US | 2021185568 | A1 | 17 June 2021 |
| | | | | US | 11212711 | B2 | 28 December 2021 |

Form PCT/ISA/210 (patent family annex) (July 2022)